# EUROPEAN PATENT SPECIFICATION

(11) **EP 4 368 029 B1**
(45) Date of publication and mention of the grant of the patent: **22.10.2025**
(21) Application number: 22315270.3
(22) Date of filing: 09.11.2022
(51) Int. Cl.: A23J 3/22, A23L 29/206, A23J 3/28, A23L 29/231, A23L 29/256

(54) **AN EDIBLE PROTEIN THREAD, AN EDIBLE FOOD PRODUCT AND A MANUFACTURING METHOD THEREOF**
ESSBARER PROTEINFADEN, ESSBARES LEBENSMITTELPRODUKT UND HERSTELLUNGSVERFAHREN DAFÜR
FIL DE PROTÉINE COMESTIBLE, PRODUIT ALIMENTAIRE COMESTIBLE ET SON PROCÉDÉ DE FABRICATION

(43) Date of publication of application: 15.05.2024
(73) Proprietor: Suprême, 91058 Evry-Courcouronnes Cedex (FR)
(72) Inventor: Sayous, Victor, Évry-Courcouronnes (FR); Conversa Martinez, Victor, Évry-Courcouronnes (FR)
(74) Representative: A.P.I. Conseil

(56) References cited:
- WO-A1-2022/189505
- WO-A1-2023/083966
- US-A1- 2021 345 643
- "Processed meats : improving safety, nutrition and quality", 14 July 2011, ELSEVIER, ISBN: 978-1-84569-466-1, article BOLES J.A.: "Use of cold-set binders in meat systems", pages: 270 - 298, XP093050890, DOI: 10.1533/9780857092946.2.270
- DICK ARIANNA ET AL: "3D printing of meat", MEAT SCIENCE, vol. 153, 7 March 2019 (2019-03-07), pages 35 - 44, XP085655841, ISSN: 0309-1740, DOI: 10.1016/J.MEATSCI.2019.03.005
- "Processed meats : improving safety, nutrition and quality", 14 July 2011, ELSEVIER, ISBN: 978-1-84569-466-1, article BOLES J.A.: "Use of cold-set binders in meat systems", pages: 270 - 298, XP093050890, DOI: 10.1533/9780857092946.2.270

## Description

### Field of the invention

The present invention relates to the field of food products. In particular, the invention relates to the field of meat substitutes. In particular, this invention relates to cultured cellbased meat. In particular, this invention can provide new edible protein threads allowing the production of an edible product with a meat-like texture. This edible product with a meat-like texture can be considered as a substitute for conventional meat.

### Description of Related Art

From 2020 to 2050, the world population will rise by an estimated 2 billion (United Nations, 2015). Humanity will face major challenges among which is food production, including meat production. Traditional meat production is a resource-intensive process that generates a significant environmental footprint. Domesticated animals are raised in agricultural settings requiring substantial quantities of fresh water, feed, land, and other resources (Mark J Post: "Cultured meat from stem cells: Challenges and prospects" Meat science, Elsevier Science, GB, vol 92, no 3, 3 April 2012, pages 297-301)*.* Consequently, food production is already considered responsible for approximately 26% of global greenhouse gas (GHG) emissions, of which livestock & fisheries account for 31%. A reduction in global conventional meat consumption could lead to a significant reduction in emissions of greenhouse gases related to climate change (Martin & Brandão, 2017. Evaluating the environmental consequences of Swedish food consumption and dietary choices. Sustainability, 9(12), 2227*),* particularly if reductions are made in countries where meat consumption is high or rising (Stoll-Kleemann & Schmidt, 2017, Reducing meat consumption in developed and transition countries to counter climate change and biodiversity loss: A review of influence factors. Regional Environmental Change, 17(5), 1261-1277*.;* Collier et al. 2021, Identifying barriers to decreasing meat consumption and increasing acceptance of meat substitutes among Swedish consumers; Appetite 167 (2021) 105643*.).* Moreover, animal welfare has been a growing concern. For example, the European Union has put in place various laws concerning animal welfare since 1986. Various directives provide rules for the protection of laying hens (in 1986 and 1988), calves and pigs (in 1991), and, in 1998, the Council directive 98/58/EC on the protection of animals kept for farming purposes has established general rules concerning the protection of animals, whatever the species.

Several meat substitutes have been developed from insects, vegetable components and/or cultured animal, fungus or vegetable cells (i.e. cell technology). In particular, cell technologies are being rapidly developed to respond to new demands of consumers. Examples of such meat substitutes products and methods of preparing these are disclosed in e.g., WO 2022/189505 A1 and WO 2023/083966 A1.

Crucial to increase people's willingness to consume meat replacements, the product, as a substitute, should mimic the aesthetic and organoleptic qualities of meat such as size, appearance, flavor, mouthfeel and texture (Macdiarmid et al., 2016, Eating like there's no tomorrow: Public awareness of the environmental impact of food and reluctance to eat less meat as part of a sustainable diet. Appetite. 2016 Jan 1;96:487-493). Although the technology of texturization to improve the feel and taste of these products is continuously improving, meat analogues still differ from conventional meat in terms of mouthfeel and flavor *(*Samard & Ryu, 2019; A comparison of physicochemical characteristics, texture, and structure of meat analogue and meats. Journal of the Science of Food and Agriculture, 99(6), 2708-2715)*.* Moreover, consumers also reported being unfamiliar with how to prepare meals with meat substitutes, making it more difficult and time consuming to make a satisfying, tasty meal using such products than using meat (Elzerman et al., 2013; Exploring meat substitutes: Consumer experiences and contextual factors. British Food Journal, 115(5), 700-710)*.*

Texture has been considered as one of the most important qualities of meat analogues *(*Sha & Xiong, 2020. Plant protein-based alternatives of reconstructed meat: Science, technology, and challenges. Trends in Food Science & Technology. Volume 102, August 2020, Pages 51-61*).* Many methods have been proposed for improving the texture of meat analogues. For example, it has been proposed to combine oat and pea proteins as a practical alternative to soy and gluten proteins (Kaleda et al. 2021. Physicochemical, textural, and sensorial properties of fibrous meat analogues from oat-pea protein blends extruded at different moistures, temperatures, and screw speeds. Future Foods 4 (2021) 100092)*.* Biosurfactant-based emulsions have also been proposed to produce 3D-printed food *(*Shahbazi et al. 2021. Construction of 3D printed reduced-fat meat analogue by emulsion gels. Part II: Printing performance, thermal, tribological, and dynamic sensory characterization of printed objects. Food Hydrocolloids 121 (2021) 107054*).* According to this study, the replacement of oil by biopolymeric surfactants is recommended to produce a fibrous, 3D-printed low-fat meat analogue, in which the printed reduced-fat constructs presented the desired sensory profile. However, for many meat analogues a satisfying flavorrich fat is still missing from the product. A combination of biopolymeric surfactants and hydrocolloids does not mimic the full suite of organoleptic properties typical of animal-derived meats, i.e. both texture, taste and aroma. It has also been proposed to produce an extruded food product comprising cultured animal cells (WO2022047263). However, the resulting extruded food bears little resemblance to what a consumer would expect from a meat product, especially if the desired appearance is a raw product and flavor kept within the meat piece.

It has also been proposed to use scaffolds to culture myoblasts and demonstrated that scaffolds prepared with non-mammalian biomaterials such as salmon gelatin, alginate, agarose, and glycerol can be used in formulations for *in vitro* meat. However, there are regulatory issues and obvious technical obstacles to the transition to large-scale manufacturing for such technology.

Hence, there are important needs to find a satisfactory alternative to animal slaughtering and intensive meat production means in order to produce an edible food product that has a pleasant flavor, a texture and a cooking behavior corresponding to that expected for meat. In particular, there is a need for edible protein threads usable in meat analogues production to mimic the conventional meat texture.

A texture expected from an animal meat before and after refined cooking is also desired to enable the consumer to cook the product in the same manner as conventional meat and to experience the same tasting quality.

### Summary of the Invention

The following sets forth a simplified summary of selected aspects, embodiments and examples of the present invention for the purpose of providing a basic understanding of the invention. However, this summary does not constitute an extensive overview of all the aspects, embodiments and examples of the invention. Its sole purpose is to present selected aspects, embodiments and examples of the invention in a concise form as an introduction to the more detailed description of the aspects, embodiments and examples of the invention that follow the summary.

The invention aims to overcome the disadvantages of the prior art. In particular, the invention proposes a method of producing an edible protein thread, said method comprising the following steps:
- Preparing a first composition, said preparation comprising:
   ∘ adding proteins, said proteins comprising animal proteins being from non-human cultivated animal cells, and
   ∘ adding a polyvalent ion;
- Preparing a second composition, said second composition comprising a polyelectrolyte which is capable of complexing with the polyvalent ion of the first composition to form a heat-resistant complex; and
- Contacting the first composition with the second composition to form the edible protein thread.

Such a method can allow the implementation of a simplified industrial process for the production of meat substitute with the textures and flavors expected for conventional meat. Indeed an edible protein thread produced by this method has a jelly texture on the outside that could mimic the extracellular matrix and thus improves the mouthfeel.

Moreover, the protein threads according to the invention can exhibit a great diversity of shape and size unlike high moisture extrusion usually used for structuring plant-based products. Also, the method according to the invention can produce three-dimensional products and bigger threads containing the flavors expected by consumers.

In particular, the method according to the invention allows the production of edible protein thread and thus edible food product with a raw aspect. With such an advantage, a consumer can still cook the product in the same manner as conventional meat and experience the same organoleptic quality. This method is scalable and allows the production of aligned threads with a higher range of fat and proteins (compared to extrusion) and with no oxidation while processing.

The edible protein thread according to the invention can be thus considered as a building block as well as one of the steps to achieve the production of an edible product that constitutes an alternative to a conventional meat product. Such an edible protein thread can be processed to mimic a large variety of meat fibers, including but not limited to beef meat, scallop, crab meat, chicken breast, duck breast, tuna meat, salmon meat and has a matching meaty or fishy flavor. Indeed, the presence of cultivated cells or of extracts thereof introduce complex and desired flavors in the protein threads and this can be modulated according to the species of the cultured cells used.

According to other optional features of the edible food product according to the invention, it can optionally include one or more of the following characteristics alone or in combination:
- the second composition comprises the polyelectrolyte at a concentration of at least 0.01% compared to the total wet weight of the second composition.
- the first composition comprises the polyvalent ions at a concentration of at least 0.001% compared to the total wet weight of the first composition.
- the second composition comprises the polyelectrolyte at a concentration of at most 5 %, compared to the total wet weight of the second composition, preferably at most 3%, even more preferably at most 1% compared to the total wet weight of the second composition. Indeed, too high concentrations of polyelectrolyte in the second composition can lead to the formation of filaments with irregularities.
- the first composition comprises the polyvalent ion at a concentration of at most 3 %, preferably of at most 2 %, more preferably of at most 1 % compared to the total wet weight of the first composition.
- at the contacting step, the first composition is at a temperature of at most 65°C, preferably the first composition is not heated at a temperature above 60°C for 10 minutes or more. In particular, the first composition is not heated at a temperature above 60°C for 10 minutes or more. Indeed, as illustrated in the examples, the properties of the edible protein threads can be degraded when the first composition is heated at high temperature for a duration of at least 10 min. Preferably, the first composition is not heated at a temperature above 50°C for 10 minutes or more.
- The non-human cultivated animal cells are selected among cells from *Animalia* kingdom, preferably animal cells are selected among *Mammalia* cells, *Aves* cells, *Actinopterygii* cells, *Malacostraca* cells, and combination thereof; for example, *Mammalia* cells can be *Bovidae* cells, *Cervidae* cells, *Leporidae* cells or *Suidae* cells; *Aves* cells can be *Anatidae* cells or *Phasianidae* cells; *Actinopterygii* cells can be *Gadidae* cells, *Merlucciidae* cells, *Pleuronectidae* cells, *Salmonidae* cells, or *Scombridae* cells; *Malacostraca* cells can be *Palaemonidae* cells and *Mollusca* cells can be *Cephalopoda* cells or *Bivalvia* cells. The cells mentioned above are particularly well suited to produce edible protein threads according to the process of the invention and thus to the preparation of edible food products.
- the non-human cultivated animal cells comprise cells selected among: stem cells such as embryonic stem cells, satellite cells, induced pluripotent stem cells, germ layers cells, fibro-adipogenic progenitors, muscle cells such as skeletal muscle cells, cardiac cells, or smooth muscle cells; myoblasts, myocytes, hepatocytes, fibrocytes, fibroblasts, adipocytes, chondrocytes, chondroblasts, keratinocytes, melanocytes, osteocytes, osteoblasts, Merkel cells, Langerhans cells, glial cells, Schwann cells, red blood cells (erythrocytes) and white blood cells, and combination thereof. The cells mentioned above are particularly well suited to produce edible protein threads according to the process of the invention and thus to the preparation of edible food products. Preferably, the non-human animal cells comprise cells selected among: stem cells, muscle cells, fibroblasts, adipocytes, erythrocytes, and combination thereof
- the animal proteins comprise myofibrillar proteins, preferably at least 0.25 % in weight compared to the total weight of proteins. Indeed, as illustrated in the example, the properties of the edible protein threads can be degraded when they are made only with plant protein which comprises no or low amount of myofibrillar proteins.

- the first composition comprises extracellular matrix non-human animal molecules, preferably at least 0.1 % in weight of extracellular matrix animal molecules compared to the total weight of proteins. Preferably extracellular matrix animal molecules are selected among collagen, elastin, fibronectin, laminin, heparan sulfate, chondroitin sulfate, keratan sulfate, hyaluronic acid or combination thereof. Indeed, as illustrated in the example, when the first composition comprises elastin and/or collagen, the properties of the edible protein threads are improved.
- the polyelectrolyte is a heat-resistant gel-forming polyelectrolyte, preferably the polyelectrolyte is a polysaccharide. Indeed, as illustrated in the example, the use of a heat-resistant gel-forming polyelectrolyte improves the properties of the edible protein threads. Also, polysaccharides, as polyelectrolytes according to the invention, are particularly well suited to produce edible protein threads according to the process of the invention and thus to the preparation of edible food products.
- the first composition comprises at least 10 % in weight of total proteins compared to the total wet weight of the first composition. As illustrated in the examples, when the first composition comprises plant proteins, the presence of non-human animal proteins from non-human cultivated animal cells is necessary to obtain the desired properties of the edible protein threads. Hence, preferably the first composition comprises at least 5 % in weight of non-human animal proteins, from non-human cultivated animal cells, compared to the total weight of proteins in the first composition.
- the first composition further comprises plant proteins, algae proteins and/or fungal proteins. As mentioned in the example the use of plant proteins can be used to tune the viscoelasticity or flow properties of the first composition.
- the preparation step of the first composition further comprises an addition of fat, preferably plant fat or fermentation-obtained fat, preferably it comprises the addition of at least 1 % in weight of fat, compared to the total wet weight of the first composition. As illustrated in example, the addition of fat in the first composition improves the properties of the edible protein threads, producing more homogeneous and thinner threads.
- the preparation of the first composition comprises a homogenization, preferably the homogenization is conducted at least at 100 rpm for a period of at least 30 seconds. The homogenization improves the properties of the edible protein thread. Moreover, when combined with the fat addition it can be used to create an emulsion which can improve the properties of the produced edible protein threads.
- the preparation of the first composition comprises an addition of disrupted non-human cultivated animal cells and/or intact non-human cultivated animal cells. Hence, the preparation of the first composition can comprise an addition of disrupted non-human cultivated animal cells and/or intact non-human cultivated animal cells. Preferably, the preparation of the first composition comprises an addition of non-human intact cultivated animal cells.

The invention also relates to a method of manufacturing an edible food product. In particular, the method of manufacturing an edible food product comprises a step of producing an edible protein thread according to a method of the invention. Also, the method of manufacturing an edible food product can comprise a step of assembling one or several of the manufactured edible protein threads into an edible food product.

The invention also relates to an edible protein thread obtainable from a method according to the invention. In particular, the invention also relates to an edible protein thread obtained from a method according to the invention. Preferably the edible protein thread according to the invention comprises animal proteins and a polyelectrolyte forming a heat-resistant gel, said animal proteins being cultivated non-human animal cell proteins.

. The invention also relates to an edible food product comprising an edible protein thread according to the invention. Also, the invention can relate to an edible food product obtainable from a method according to a method of the invention. Preferably, it relates to a an edible food product obtained from a method of manufacturing according to a method of the invention.

### Brief description of the drawings

The foregoing and other objects, features and advantages of the present invention will become more apparent from the following detailed description when taken in conjunction with the accompanying drawings in which
Figure 1 is a schematic view of a method of producing an edible food product with meat-like texture according to an embodiment of the invention.
Figure 2 is an illustration of a system according to the invention.
Figure 3 is a photograph of edible protein threads.
Figure 4 is a photograph of an edible food product.

Several aspects of the present invention are disclosed with reference to flow diagrams and/or block diagrams of methods and devices.

On the figures, when present, the flow diagrams and/or block diagrams show the architecture, the functionality and possible implementation of devices or systems or methods, according to several embodiments of the invention.

In some implementations, the functions associated with the box may appear in a different order than indicated in the drawings. For example, two boxes successively shown, may be performed substantially simultaneously, or boxes may sometimes be performed in the reverse order, depending on the functionality involved.

### Detailed description

A description of example embodiments of the invention follows.

The expression "protein thread" as used herein can relate to a long, thin strand of material comprising at least 5 % in weight of proteins, preferably at least 7.5 %, more preferably at least 10% in weight of proteins compared to the wet weight of the thread. Preferably, a protein thread has a diameter of at least 0.01mm, preferably at least 0.05mm and an aspect ratio (length/diameter) of at least 100, preferably at least 200. Preferably the protein thread has a diameter of at most 2 mm, more preferably at most 1 mm, even more preferably at most 0.5 mm. The expression "edible protein thread" as used herein can relate to a protein thread suitable for animal consumption and preferably a protein thread suitable for human consumption.

The expressions "edible product" or "edible food product" as used herein can relate to a product suitable for animal consumption and preferably a product suitable for human consumption. An edible product according to the invention can be a ready to eat (i.e finalized) food product or an intermediate in the production chain of a finalized food product. As it is described hereafter, an edible product according to the invention can be produced in the form of a snack which may be pressed, fried and/or toasted; a sauce; a spread; a pasta; a paste; transformed meat-analogues or food speciality food such as sausage or cured sausage, pâté or foie gras; a meat dough; a soup; a smoothie; a seafood; untransformed meat-analogues such as "flesh like" products.

In the following description, the term "meat" can refer to any edible part of an animal such as an animal tissue taken from a slaughtered animal. Hence, a meat can refer to liver or other offal tissues, fat tissues, muscle tissues conventionally found in an animal. The dead animal can refer to all species of the Animalia kingdom excluding human and preferably to all edible species such as a non-human vertebrate, for example, livestock, fish, bird; insect; a crustacean, for example a shrimp, prawn, crab, crayfish, and/or a lobster; a mollusk, for example an octopus, squid, cuttlefish, scallops, snail. Hence, for example, the invention allows the production of an edible product having meat-like texture such as a product mimicking foie gras, marbled beef, or salmon flesh.

As used herein, the expression "in weight" is generally referring to the weight of a component compared to the weight of another component or of the whole composition, either the wet weight or the dry weight can be considered. Preferably, percentages are disclosed in reference to the wet weight.

As used herein, the expressions "cultivated cells" or "cultured cells" are used interchangeably. They can refer to cells multiplied and/or grown, preferably in a controlled environment, using a culture medium. It refers in particular to cells with a growth controlled by mankind, for example in an industrial process, as opposed to cells from conventional meat that have been multiplied in a living organism or cells grown in a natural environment (e.g. forest grown mushrooms). Cultivated cells can refer to cells belonging to *Animalia* kingdom for the proteins but also to *Bacteria, Viridiplantae* and *Fungi* kingdoms for example to provide additional proteins or fat. Cultivated cells can originate from cells of any origin such as cells from biopsies, from stem cells or correspond to stem cells themselves. More particularly, a cultivated cells-based protein thread can refer to a protein thread which is constituted mainly of proteins from cultivated cells. For example, a cultivated cells-based protein thread comprises at least 5% in weight of proteins from cultivated cells, preferably at least 10% in weight of proteins from cultivated cells, more preferably 20% in weight of proteins from cultivated cells, even more preferably 30% in weight of proteins from cultivated cells, compared to the total weight of proteins.

As used herein, the expression "extracts of cultivated cells" can refer to any fraction of disrupted cells or to any biological material purified or partially purified recovered from disrupted cells, such as cultivated cells protein extracts. Disrupted cells can be cells having partially or completely destroyed cell walls. In a protein thread, extracts of cultivated cells can comprise both disrupted cells and/or biological material recovered from disrupted cells. An extract of cultivated cells can for example be obtained by the separation and purification of the biological material recovered from disrupted cells. Hence, the extracts can for example be obtained after at least a drying step, a precipitation step or a solvent extraction step. An intact cultivated animal cells can refer to cultivated animal cells with an intact membrane as it can be evaluated by microscopy.

As used herein, the term **"polyelectrolyte"** can refer to macromolecules that, when dissolved in a polar solvent like water, have a (large) number of charged groups covalently linked to them. In general, polyelectrolytes may have various kinds of such groups. Homogeneous polyelectrolytes have only one kind of charged group, e. g. only carboxylate groups.

As used herein, the expression "myofibrillar proteins" can refer to actin, myosin, tropomyosin, troponin, alpha-actinin, connectin, titin, nebulin, C protein, M protein, desmin, or combination thereof.

As used herein, the expression "heat-resistant gel" can refer to a gel, for example formed from a polyelectrolyte and a polyvalent ion, which is not liquid at a temperature below 80°C. Preferably, it refers to a gel which is not liquid at a temperature below 100°C. As used herein, the expression "heat-resistant gel-forming polyelectrolyte" can refer to a polyelectrolyte which, when combined with a suitable polyvalent ion, forms a heat-resistant gel.

As used herein, the expression "biodegradable polymers" can refer to polymers that can be broken down or degraded into innocuous products by biological activity of living organisms (such as microorganisms).

As used herein, the expressions "fermented fat" or "fermentation obtained fat" can refer to lipid molecules produced in growth reactors for example through microbial fermentation. Lipid molecules obtained by fermentation can be chemically identical to fat produced by plants or animals.

As used herein, the term "flavor" is generally the quality of the product that affects the sense of taste and/or the aroma. Hence, a "meat-like flavor" can refer to a flavor which is close to, or which approximates, the flavor of the related conventional meat product.

As used herein, the term "texture" can be considered as the "combination of the rheological and structural (geometrical and surface) attributes of a food product perceptible by means of mechanical, tactile, and where appropriate, visual and auditory receptors" as defined in 2008 by the International Standards Organization (ISO, 2008, Sensory analysis - vocabular, Vols. 1-107, p. 5492). Hence, a "meat-like texture" can refer to the rheological and structural (geometrical and surface) attributes of a food product which is close to, or which approximates, the texture of the related conventional meat product (i.e. a meat product derived from animal slaughtering). An edible food product according to the invention with a meat-like texture and a meat-like flavor can be considered as an alternative to a meat product.

The term "about" as used herein can allow for a degree of variability in a value or range, for example, within 10%, within 5%, or within 1% of a stated value or of a stated limit of a range.

The term "substantially" as used herein refers to a majority of, or mostly, as in at least about 50%, 60%, 70%, 80%, 90%, 95%, 96%, 97%, 98%, 99%, 99.5%, 99.9%, 99.99%, or at least about 99.999% or even more. Hence, a composition with cells preserved substantially intact refers to a composition comprising at least about 50%, 60%, 70%, 80%, 90%, 95%, 96%, 97%, 98%, 99%, 99.5%, 99.9%, 99.99%, of intact cells.

As mentioned, the production of tasty meat-like products without animal slaughtering, is a challenge for both animal welfare and the environment. In addition to animal welfare or environmental protection, it appears necessary to produce a food product which corresponds to the expectations of consumers by exhibiting qualities close to those of a conventional product by, in particular, producing protein threads similar to those found in meat.

In particular, there is a need for a simplified industrial process for the production of meat substitute with the textures and flavors expected for conventional meat. Such a meat substitute should comprise edible protein threads producing an enjoyable mouthfeel and capable of mimicking a large variety of meat fibers, including but not limited to beef meat, scallop, crab pulpit, chicken breast, duck breast, tuna meat, and has a matching meaty or fishy flavor.

A new method has been developed for producing an edible protein thread, which can have meat-like texture without comprising tissues from a slaughtered animal.

Hence, according to a first aspect, the invention relates to a method 100 of producing an edible protein thread.

The method 100 of manufacture according to the invention preferably allows the production of an edible protein thread which can have a meat-like texture.

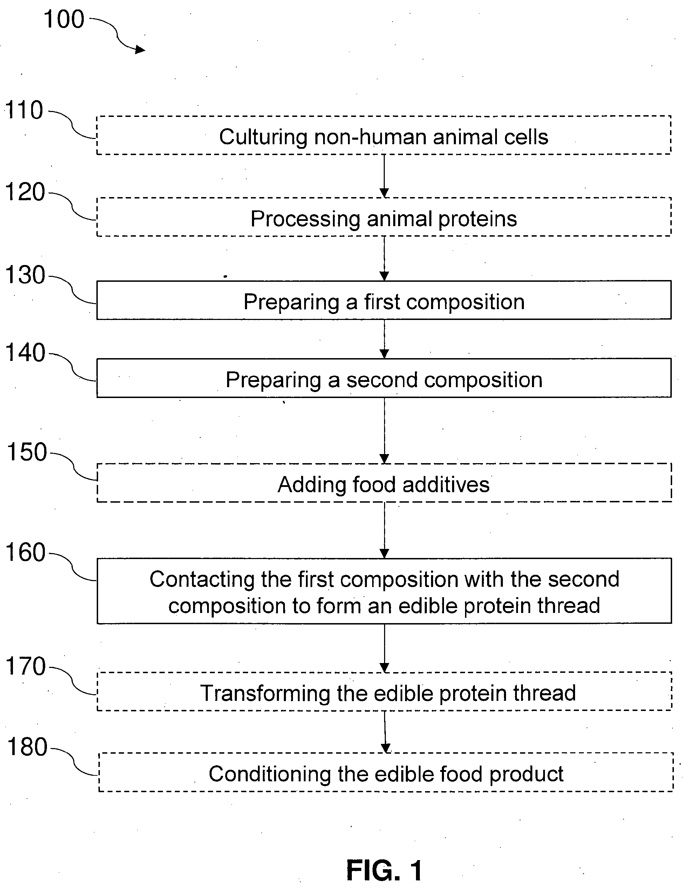

As illustrated in figure 1, the method comprises the steps of: preparing a first composition 130, preparing a second composition 140, contacting 160 the first composition with the second composition to form an edible protein thread.

An edible protein thread or edible food manufacturing method can comprise several other steps such as: blanching, heat sterilization, evaporation and distillation, dehydration, smoking, baking and roasting, frying, high pressure processing, Pulsed Electric Field (PEF) processing, ultrasound/ cavitation / shock wave processing, pasteurization, application of cold plasma, dielectric, ohmic and infrared processing, microwave heating / blanching / assisted extraction, food irradiation, UV microbial inactivation, pulsed light technology, supercritical extractions, extrusion, freezing, chilling, modified atmospheres, drying technologies (freeze drying, membranes), fermentation, homogenization, mincing, grinding, chopping, salting, tumbling, curing, brine injection. In particular, a method according to the invention can also comprise additional steps such as: culturing 110 non-human animal cells, processing 120 non-human animal proteins, adding food additives 150, transforming 170 the edible protein thread, and/or conditioning 180 an edible food product.

As shown in **figure 1****,** a method according to the invention can comprise a step of **culturing 110 non-human animal cells.**

This step is in particular designed to generate an animal protein source without having to slaughter animals.

The animal cells can for example be selected from all non-human cells that can be found in usually bred, hunted or fished animals. Hence, the cultivated non-human animal cells can be selected among avian cells, bovine cells, seafood cells, porcine cells, ovine cells.

Preferably, the animal cells are selected among cells from *Animalia* kingdom, in particular animal cells are selected among *Mammalia* cells, *Aves* cells, *Actinopterygii* cells, *Malacostraca* cells, *Mollusca* cells, and combination thereof.

For example and in a non-limiting way, *Mammalia* cells can be *Bovidae* cells, *Cervidae* cells, *Leporidae* cells or *Suidae* cells; *Aves* cells can be *Anatidae* cells or *Phasianidae* cells; *Actinopterygii* cells can be *Gadidae* cells, *Merlucciidae* cells, *Pleuronectidae* cells, *Salmonidae* cells, or *Scombridae* cells; *Malacostraca* cells can be *Palaemonidae* cells and *Mollusca* cells can be *Cephalopoda* or *Bivalvia* cells.

Preferably, the non-human animal cells comprise *Bovidae* cells, *Cervidae* cells, *Leporidae* cells, *Suidae* cells, *Anatidae* cells, *Phasianidae* cells, *Gadidae* cells, *Merlucciidae* cells, *Pleuronectidae* cells, *Salmonidae* cells, *Scombridae* cells and/or *Palaemonidae* cells.

More preferably, the non-human animal cells comprise *Bovidae* cells, *Suidae* cells, *Anatidae* cells, *Phasianidae* cells, *Gadidae* cells, *Merlucciidae* cells, *Salmonidae* cells, *Scombridae* cells.

Even more preferably, the non-human animal cells comprise *Bovidae* cells, *Suidae cells, Anatidae* cells, *Phasianidae* cells, *Scombridae* cells.

Whatever their origin, several types of cells can be used in this step of culturing 110.

For example, the non-human animal cells comprise cells selected among: stem cells such as embryonic stem cells, satellite cells, induced pluripotent stem cells, germ layers cells, fibro-adipogenic progenitors, muscle cells such as skeletal muscle cells, cardiac cells, or smooth muscle cells; myoblasts, myocytes, hepatocytes, fibrocytes, fibroblasts, adipocytes, chondrocytes, chondroblasts, keratinocytes, melanocytes, osteocytes, osteoblasts, Merkel cells, Langerhans cells, glial cells, Schwann cells, red blood cells (erythrocytes) and white blood cells, and combination thereof.

Preferably, the non-human animal cells comprise cells selected among: stem cells, muscle cells, fibroblasts, adipocytes, erythrocytes, and combination thereof.

There are many methods of culturing cells. These methods are often laboratory methods, but there are also many methods suitable for large volume production and human consumption. Hereafter we described some of the adapted methods for culturing non-human cells in the context of the invention.

During the step of culturing 110 non-human animal cells, cells can be either cultured in suspension or in adherence.

Advantageously, regardless of their origin, the cultivated non-human animal cells can be considered as cells grown in a culture medium. Advantageously, the culture medium does not comprise fetal bovine serum nor growth factors. The culture medium may be supplemented, preferably gradually, with hydrolysate as plant or yeast hydrolysate. Such serum free medium allows to reduce or eliminate need for animal derived components.

Various media formulations are optionally used to enable the maintenance of the capacity for self-renewal such as during expansion of the cell population. As explained, the media formulations may be modified from conventional media to not require fetal bovine serum or animal alternatives to bovine serum nor growth factors. Rather, the medium may include plant or yeast hydrolysates. Examples of plant-based formulations include soybeanbased and plant hydrolysate-based media formulations. Some media formulations may further comprise at least one ingredient for enhancing the nutritional content of the cultured cells.

In addition, the medium comprises all the components, and nutrients necessary to the development of cells such as salt, glucose, water, salt minerals, and amino acids.

In an embodiment, the culture medium may comprise scaffolds. The cells can be cultivated in incubators with a set up as e.g. temperature at 37°C, 5% of CO2, at a pH of 7 and with moisture of at least 95%.

**Also, the step of culturing 110 non-human animal cells can comprise a step of differentiating the cultivated cells.** There are many methods of cell differentiation. These methods are often laboratory methods, but there are also many methods suitable for large volume production and human consumption. Hereafter, we described some of the adapted methods for differentiation of non-human cells in the context of the invention or using already differentiated cells. Cell differentiation may comprise production of particular proteins which contribute to the texture in a specific way more particularly related to a specific edible product.

### Differentiation of non-human embryonic stem cells

Cells in the first composition may be derived from differentiation of non-human embryonic stem cells. The differentiation comprises the sum of the processes whereby undifferentiated or unspecialized cells attain their function. Stem cells can be isolated from embryos and cultured using specific cultured media in order to achieve cellular proliferation and maintenance of the undifferentiated state. This is particularly advantageous in order to reach a sufficient cell density or cell number. In an embodiment, the media formulations use synthetic serum-free media.

Next, the embryonic stem cells can be induced to differentiate for example into hepatocytes, fibroblasts, keratinocytes, myocytes or adipocytes. Differentiation can be triggered through the exposure to specific factors (e.g. growth factors or proteins) and/or culture condition (e.g. shear stress). For example, to obtain hepatocytes, non-human embryonic stem cells are induced into cells of the definitive endoderm, preferably with specific growth factors such as Activin A, WNT, FGF, or BMP; or other components having an effect on differentiation such as Insulin transferrin selenium, Rapamycin, KOSR, or Sodium butyrate. Next, cells of the final endoderm are specified into hepatic endoderm cells then hepatoblasts, preferably with specific factors as HGF, FGF, FGF and BMP. Hepatoblasts are differentiated into hepatocytes by differentiation induced with a combination of factors, preferably such as HGF, Oncostatin M, Dexamethasone and TGF-β. Next, the differentiated hepatocytes can be cultured and expanded to a desired quantity of cells.

### Differentiation of non-human induced pluripotent stem cells.

Cells in the first composition may be derived from differentiation of non-human induced pluripotent stem cells.

An episomal reprogramming strategy, for example of avian dermal fibroblasts isolated from goose, duck or chicken, can be employed to create induced pluripotent stem cells from the fibroblasts without the use of classic viral reprogramming techniques.

The induced pluripotent stem cells can be cultured using optimized media substrates and media formulations to achieve persistent cellular proliferation and maintenance of the de-differentiated state. The media formulations preferably use synthetic serum-free media. Preferably, the cells are cultured in a pathogen-free cell culture system. Next, the pluripotent stem cells can be triggered to differentiate into a specific lineage as myocytes or hepatocytes and expanded to a desired quantity of cells.

### Transdifferentiated non-human isolated cells.

Cells in the first composition may be derived from transdifferentiated non-human isolated cells. Transdifferentiation refers to the differentiation from one differentiated cell type to another differentiated cell type, preferably, in one step. Transdifferentiation can relates to a method that modifies the differentiated phenotype or developmental potential of a cell without the formation of a pluripotent intermediate cell; i.e. it does not require that the cell be first dedifferentiated (or reprogrammed) and then differentiated to another cell type. Instead, the cell type is merely "switched" from one cell type to another without going through a less differentiated phenotype. Transdifferentiation may also comprise a first step of submitting first cells having a first cell fate to conditions to generate second cells (i.e., a less differentiated cells) that are capable of differentiating into a second cell fate; and a second step of submitting the less differentiated cells to conditions triggering differentiation into cells having the second cell fate, such as myocytes or hepatocyte cells.

For example, non-human cells such as embryonic fibroblasts, embryonic stem cells, satellite cells or muscle cells are isolated using techniques known in the field of cell biology as exposed above and are cultivated in a medium comprising basal medium, antibiotics, nonessential amino acids, as well as reducing agents, serum, minerals and growth factors.

### Immortalized mature non-human myocytes or hepatocytes.

Cells in the first composition may be selected from immortalized mature non-human differentiated cells. Cells can be immortalized using classical techniques such as transformation or spontaneous immortalization by sequentially passing the cells until spontaneous mutation that results in immortalization. For example, in the case of hepatocytes, the specificity of the immortalized mature non-human hepatocytes lies in the fact that cells are able to divide indefinitely. Mature avian hepatocytes can be isolated from duck, goose or chicken liver. The immortalized myocytes or hepatocytes can be expanded to a desired quantity of cells and grown in culture medium.

### Differentiated cells derived from differentiation of non-human progenitor cells.

Cells in the first composition may be selected from differentiated cells derived from non-human progenitor cells. The progenitor can be grown using optimized media substrates and media formulations in order to obtain a persistent cellular proliferation and maintenance of the pluripotent state. The media formulations may comprise synthetic serum-free media. In the case of satellite cells, they are induced to differentiate into mature skeletal muscle cells and expanded to a desired quantity of cells thanks to specific and well-known differentiation factors.

As shown in **figure 1****,** a method according to the invention can comprise **a step of processing 120 animal proteins.**

This step is in particular designed to prepare the animal proteins, especially those produced during the cell culture step, so that they are suitable for the subsequent steps.

For example, the animal proteins used in the invention can be brought in the compositions within cultivated cells that have been kept intact. Alternatively, they may be brought in the compositions with cultivated cells that have been disrupted. Also, the animal proteins can be extracted from cultivated cells, for example disrupted cultivated cells.

Hence, after the step of culturing, the cultivated cells can be preserved substantially intact or they may have been substantially disrupted for example by homogenization, extrusion, mix, blending or melt blowing, electrospinning, centrifugal spinning, blow spinning.

When the cultivated cells have been disrupted, the method according to the invention can comprise a step of extracting specific compounds after the disruption. For example, the method according to the invention can comprise a step of extracting the proteins from the cultivated cells. Proteins can be purified or can be segregated in protein fractions according to specific physico-chemical properties.

**As shown in** **figure 1****,** a method 100 of producing an edible protein thread according to the invention comprises a step of **preparing a first composition 130.**

This step is in particular designed to define the main constituent of the protein thread and its mechanical and organoleptic properties. Hence, such a step contributes to the resolution of the problems solved by the invention.

The dry content of the first composition can have a marked influence on the mechanical properties of the protein threads obtained with said first composition.

Hence, preferably the first composition has a dry content of at least 12 wt%. Preferably, the first composition has a dry content of at least 15 wt%, more preferably a dry content of at least 20 wt%.

Preferably the first composition has a dry content of at most 90 wt%. Preferably, the first composition has a dry content of at most 85 wt%, more preferably a dry content of at most 80 wt%.

Also, since this composition is the basis for.the constitution of protein threads, it preferably includes a significant amount of protein. Hence, the first composition can comprise at least 10 % in weight of proteins compared to the total wet weight of the first composition. Preferably, the first composition can comprise at least 15 % in weight of proteins compared to the total wet weight of the first composition, more preferably at least 20 % in weight, even more preferably at least 25 % in weight, compared to the total wet weight of the first composition. The first composition can comprise at most 40% in weight of proteins compared to the total wet weight of the first composition. Preferably, the first composition can comprise at most 38 % in weight of proteins compared to the total wet weight of the first composition, more preferably at most 35 % in weight, even more preferably at most 30 % in weight, compared to the total wet weight of the first composition. Hence, the first composition can comprise from 10 % to 40 % in weight of proteins compared to the total wet weight of the first composition. Preferably, the first composition can comprise from 15 % to 38 % in weight of proteins compared to the total wet weight of the first composition, more preferably from 20 % to 35 %, even more preferably from 25 % to 30 % in weight.

Notably, the first composition 130 comprises animal proteins which have been obtained from non-human cultivated animal cells.

### Animal proteins

In contrast to the conventional method of producing protein threads, the animal proteins used here are not proteins produced from a slaughtered animal, but proteins produced by non-human animal cells grown in a cell culture facility.

Hence, the step of preparing a first composition 130 can comprise an addition of proteins, said proteins comprising animal proteins being from non-human cultivated animal cells.

As it has been described, the animal proteins can be brought in the first composition in the form of intact or disrupted cultivated cells or also in the form of extracted proteins.

Hence, the step of preparing a first composition 130 can comprise the addition of cultivated cell extracts, disrupted cultivated cells and/or intact cultivated cells. More preferably, the first composition comprises food-grade non-human animal cells (intact or disrupted) harvested from a cell culture (in suspension or in adherence, preferably in suspension), or extracts of said cells, preferably protein extracts of said cells.

Preferably, the first composition comprises cultivated non-human animal cells. The cultivated non-human animal cells can comprise disrupted cultivated cells and/or intact cultivated cells.

In particular, the first composition can comprise at least 1 % in dry weight of cultivated non-human animal cells compared to the total wet weight of the first composition. Preferably, before the contacting 160 step, the first composition can comprise at least 2 % in dry weight of cultivated non-human animal cells compared to the total wet weight of the first composition, more preferably at least 4 % in dry weight, even more preferably at least 8 % in dry weight, compared to the total wet weight of the first composition.

In particular, the first composition can comprise at most 30% in dry weight of cultivated non-human animal cells compared to the total wet weight of the first composition. Preferably, before the contacting 160 step, the first composition can comprise at most 28 % in dry weight of cultivated non-human animal cells compared to the total wet weight of the first composition, more preferably at most 25% in dry weight, even more preferably at most 22 % in dry weight, compared to the total wet weight of the first composition.

In particular, the first composition can comprise cultivated non-human animal cells from 1% to 30 % in dry weight compared to the total wet weight of the first composition. Preferably, the first composition can comprise cultivated non-human animal cells from 2 % to 28 % in dry weight compared to the total wet weight of the first composition, more preferably from 4 % to 25 % in dry weight, even more preferably from 8 % to 22 % in dry weight, compared to the total wet weight of the first composition.

The quantity of cultivated non-human animal cells can be measured after harvesting and centrifugation and corrected based on the moisture content. The moisture content can be measured according to the international norm ISO 1442:1997. When implementing a method of producing an edible product or ingredient, the origin of the ingredient is generally known. Hence, the person skilled in the art implementing the invention will be able to know if he is adding proteins that are either animal proteins being from non-human cultivated animal cells or not. An animal protein being from non-human cultivated animal cells is for example a protein produced by a non-human animal cell which is grown in a bioreactor or fermentation reactor.

In particular, before the contacting 160 step, the first composition can comprise at least 1 % in dry weight of cultivated non-human animal cell extracts compared to the total wet weight of the first composition. Preferably, before the contacting 160 step, the first composition can comprise at least 2 % in dry weight of cultivated non-human animal cell extracts compared to the total wet weight of the first composition, more preferably at least 4 % in dry weight, even more preferably at least 8 % in dry weight, compared to the total wet weight of the first composition.

In particular, before the contacting 160 step, the first composition can comprise at most 30 % in dry weight of cultivated non-human animal cell extracts compared to the total wet weight of the first composition. Preferably, before the contacting 160 step, the first composition can comprise at most 28 % in dry weight of cultivated non-human animal cell extracts compared to the total wet weight of the first composition, more preferably at most 25 % in dry weight, even more preferably at most 22 % in dry weight, compared to the total wet weight of the first composition.

In particular, before the contacting 160 step, the first composition can comprise cultivated non-human animal cell extracts from 1% to 30 % in dry weight compared to the total wet weight of the first composition. Preferably, before the contacting 160 step, the first composition can comprise cultivated non-human animal cell extracts in an amount that is from 2 % to 28 % in dry weight compared to the total wet weight of the first composition, more preferably from 4 % to 25 % in dry weight, even more preferably from 8 % to 22 % in dry weight, compared to the total wet weight of the first composition.

The concentration of **proteins,** and in particular **animal proteins,** in the first composition can affect the texture of the protein thread.

The first composition can comprise at least 0.5 % in weight of animal proteins being from non-human cultivated animal cells compared to the total wet weight of the first composition. Preferably, the first composition can comprise at least 1 % in weight of animal proteins being from non-human cultivated animal cells compared to the total wet weight of the first composition, more preferably at least 2 % in weight, even more preferably at least 4 % in weight, compared to the total wet weight of the first composition.

The first composition can comprise at most 30 % in weight of animal proteins being from non-human cultivated animal cells compared to the total wet weight of the first composition. Preferably, the first composition can comprise at most 28 % in weight of animal proteins being from non-human cultivated animal cells compared to the total wet weight of the first composition, more preferably at most 25 % in weight, even more preferably at most 22 % in weight, compared to the total wet weight of the first composition.

Hence, the first composition can comprise from 0.5 % to 30 % in weight of animal proteins being from non-human cultivated animal cells compared to the total wet weight of the first composition. Preferably, the first composition can comprise from 1 % to 28 % in weight of animal proteins being from non-human cultivated animal cells compared to the total wet weight of the first composition, more preferably from 2 % to 25 % in weight, even more preferably from 4 % to 22 % in weight, compared to the total wet weight of the first composition.

The first composition can comprise at least 5 % in weight of animal proteins being from non-human cultivated animal cells compared to the total weight of protein in the first composition. Preferably, the first composition can comprise at least 10 % in weight of animal proteins being from non-human cultivated animal cells compared to the total weight of protein in the first composition, more preferably at least 20 % in weight, even more preferably at least 30 % in weight, at least 40 % in weight, at least 50 % in weight, at least 60 % in weight, compared to the total weight of protein in the first composition.

The first composition can comprise at most 100 % in weight of animal proteins being from non-human cultivated animal cells compared to the total weight of protein in the first composition. Preferably, the first composition can comprise at most 90 % in weight of animal proteins being from non-human cultivated animal cells compared to the total weight of protein in the first composition, more preferably at most 80 % in weight compared to the total weight of protein in the first composition.

Hence, the first composition can comprise from 5 % to 100 % in weight of animal proteins being from non-human cultivated animal cells compared to the total weight of protein in the first composition. Preferably, the first composition can comprise from 10 % to 100 % in weight of animal proteins being from non-human cultivated animal cells compared to the total weight of protein in the first composition, more preferably from 20 % to 100 %, even more preferably from 30 % to 100% in weight, from 40 % to 90% in weight, from 50 % to 100% in weight, from 50 % to 90% in weight, compared to the total weight of protein in the first composition.

Preferably, the quantity of animal proteins can be measured using Kjeldahl titration according to the international norm ISO-937:1978. When implementing a method of producing an edible product or ingredient, the origin of the ingredient is generally known. Hence, the person skilled in the art implementing the invention will be able to know if he is adding proteins that are either animal proteins being from non-human cultivated animal cells or not.

In the context of the present invention, the presence of specific molecules, in particular proteins, can be of utmost importance to improve the final protein thread quality. The quantity of specific molecules, in particular proteins, can be measured by well-known techniques by the man skilled in the art such as enzyme-linked immunosorbent assay or mass spectrometry.

For example, the animal proteins can comprise heat shock proteins.

For example, the myofibrillar proteins can comprise actin, myosin, tropomyosin, troponin, actinin, connectin, titin, nebulin, C protein, M proteins, desmin or a combination thereof.

Preferably, the myofibrillar proteins are selected among: actin, desmin, myosin, troponin, titin, nebulin or a combination thereof. More preferably, the myofibrillar proteins are selected among: actin, desmin, myosin, troponin or a combination thereof. Even more preferably, the myofibrillar proteins are selected among: actin, myosin or a combination thereof.

The first composition can comprise at least 0.25 % in weight of myofibrillar proteins compared to the total weight of proteins, preferably at least 0.5 % in weight of myofibrillar proteins, more preferably at least 1 % in weight of myofibrillar proteins, even more preferably at least 2% weight of myofibrillar proteins compared to the total weight of proteins.

The first composition can comprise at most 70 % in weight of myofibrillar proteins compared to the total weight of proteins, preferably at most 60 % in weight of myofibrillar proteins, more preferably at most 50 % in weight of myofibrillar proteins, even more preferably at most 40% in weight of myofibrillar proteins compared to the total weight of proteins.

Hence, the first composition can comprise between 0.25% and 70 % in weight of myofibrillar proteins compared to the total weight of proteins, preferably between 0.5 % and 60% in weight of myofibrillar proteins, more preferably between 1% and 50% in weight of myofibrillar proteins, even more preferably between 2% and 40% in weight of myofibrillar proteins compared to the total weight of proteins.

In particular, the first composition can advantageously comprise specific myofibrillar proteins. For example, the first composition can comprise troponin protein preferably at least 0.0125 % in weight of troponin protein compared to the total weight of proteins in the first composition, preferably at least 0.025% in weight, more preferably at least 0.05% in weight, even more preferably at least 0.1% in weight compared to the total weight of proteins in the first composition.

The first composition can comprise at most 3.5 % in weight of troponin protein compared to the total weight of proteins in the first composition, preferably at most 3% in weight, more preferably at most 2.5% in weight, even more preferably at most 2% in weight, compared to the total weight of proteins in the first composition.

Hence, the first composition can comprise from 0.0125 to 3.5 % in weight of troponin protein compared to the total weight of proteins in the first composition, preferably from 0.025 to 3 % in weight, more preferably from 0.05 to 2.5 % in weight; even more preferably from 0.1 to 2 % in weight, compared to the total weight of proteins in the first composition.

The troponin can be produced by a cultivated animal cell. However, it can also be a recombinant troponin that can be produced by a cultivated cell which can be a plant cell, an insect cell or a microbial cell.

In the context of the present invention, the presence of some specific molecules can improve the produced protein thread. In particular, the presence of extracellular matrix animal molecules (ECM) such as ECM polysaccharides, ECM proteoglycans or ECM proteins, can improve the produced protein thread. ECM proteins are particularly preferred. For example, the first composition can comprise at least 0.1 % in weight of extracellular matrix animal molecules compared to the total weight of proteins. Preferably, it comprises at least 0.5 % in weight of extracellular matrix animal molecules compared to the total weight of proteins, more preferably at least 1 % in weight, even more preferably at least 1.5 % in weight of extracellular matrix animal molecules compared to the total weight of proteins. When the first composition comprises several extracellular matrix animal molecules the concentrations are cumulated to evaluate the quantity of extracellular matrix animal molecules in the first composition.

Such molecules can be added in the first composition through cultivated cells, preferably cultivated animal cells, such as fibroblasts, known to produce such molecules.

The first composition can comprise collagen, preferably at least 1 % in weight of collagen compared to the total weight of proteins in the first composition, preferably at least 2 % in weight, more preferably at least 3 % in weight, even more preferably at least 4 % in weight, compared to the total weight of proteins in the first composition.

The first composition can comprise at most 16 % in weight of collagen compared to the total weight of proteins in the first composition, preferably at most 14 %, more preferably at most 12 %, even more preferably at most 10 % in weight, compared to the total weight of proteins in the first composition.

Hence, the first composition can comprise from 1 to 16 % in weight of collagen compared to the total weight of proteins in the first composition, preferably from 2 to 14 % in weight, more preferably from 3 to 12 % in weight; even more preferably from 4 to 10 % in weight, compared to the total weight of proteins in the first composition.

The collagen can be a collagen produced by a cultivated animal cell. However, it can also be a recombinant collagen that can be produced by a cultivated cell which can be a plant cell, an insect cell or a microbial cell.

The first composition can comprise elastin and/or tropoelastin, preferably at least 0.065 % in weight of elastin and/or tropoelastin compared to the total weight of proteins in the first composition, preferably at least 0.13 % in weight, more preferably at least 0.2 % in weight, even more preferably at least 0.25 % in weight, compared to the total weight of proteins in the first composition.

The first composition can comprise at most 7.5 % in weight of elastin and/or tropoelastin compared to the total weight of proteins in the first composition, preferably at most 7 % in weight, more preferably at most 6.5 % in weight, even more preferably at most 6 % in weight, compared to the total weight of proteins in the first composition.

Hence, the first composition can comprise from 0.065 to 7.5 % in weight of elastin and/or tropoelastin compared to the total weight of proteins in the first composition, preferably from 0.13 to 7 % in weight, more preferably from 0.2 to 6.5 % in weight; even more preferably from 0.25 to 6 % in weight, compared to the total weight of proteins in the first composition.

Preferably, said elastin and/or tropoelastin are produced by a cultivated animal cell. However, it can also be a recombinant elastin and/or tropoelastin that can be produced by a cultivated cell which can be a plant cell, an insect cell or a microbial cell, elastin and/or tropoelastin being preferably in a soluble form.

As it has been described, the first composition comprises animal proteins being from non-human cultivated animal cells. However, the first composition can comprise proteins from other origins.

In particular, the step of preparation of a first composition 130 can comprise the addition of non-animal proteins such as plant proteins, microbial proteins, algae proteins and/or fungal proteins. As it is mentioned in the examples, adding some non-animal proteins can be used to tune the viscoelasticity or flow properties of the first composition comprising non-human animal cultivated cells.

In a particular embodiment, the first composition further comprises plant proteins, preferably the plant proteins can be selected among : sunflower proteins, soybeans proteins, pea proteins, canola proteins, mung bean proteins, chickpea proteins, faba bean proteins, lentils proteins, seaweed proteins, potato proteins, quinoa proteins, nuts proteins, wheat proteins, winged bean protein, bambara bean proteins, dulse proteins, mesquite bean proteins, duckweed proteins, winged bean protein, dry broad bean proteins, dry cow pea proteins, lupins proteins, jackfruit proteins, amaranth proteins, millet proteins, oat proteins, chia proteins, hemp seed proteins and rice proteins or a combination thereof.

Preferably, the step of preparation of a first composition 130 can comprise the addition of non-animal proteins from at least two different sources. For example, the first composition comprises plant proteins from at least two different plants. Indeed, a combination of several origins allows an improvement of the properties of the edible protein threads and the establishment of an amino acid profile optimized for human nutrition. More preferably the step of preparation of a first composition 130 can comprise the addition of pulse proteins and cereal proteins.

The first composition also comprises a **polyvalent ion.**

As it is described hereafter and illustrated in the example, the method 100 of producing an edible protein thread according to the invention uses a polyvalent ion and polyelectrolyte which are complementary and which, when combined, produce a heat-resistant gel.

As it is described after, the polyvalent ion and the polyelectrolyte can be combined at the step of contacting 160 the first composition with the second composition.

### Polyvalent ion

The step of preparing a first composition 130 comprises an addition of a polyvalent ion. Preferably the polyvalent ion is added in the form of a salt of the polyvalent ion or in the form of a solution comprising the polyvalent ion. Thus, the polyvalent ion is preferably in a free form also called an uncomplexed form.

In particular, it comprises the addition of the polyvalent ion at a concentration of at least 0.001 % in weight compared to the total wet weight of the first composition. In a preferred embodiment, the polyvalent ion is added in a soluble form, in particular in an uncomplexed form such as in the form of a salt dissolved in water.

As mentioned, in a method according to the invention, the polyvalent ion can combine with the polyelectrolyte to form a heat-resistant gel.

The polyvalent ion can be either polyvalent anion or a polyvalent cation. For example, the polyvalent ion is selected among: calcium, magnesium, iron, manganese, copper, zinc, carbonate, oxalate, sulfate, sulfite, phosphate or combination thereof. Preferably, the polyvalent ion is selected among: calcium, magnesium, iron, manganese, copper, zinc, carbonate, oxalate, sulfate, phosphate or combination thereof.

The polyvalent ion can be obtained by dissolving the form of a salt. For example, the counter ions can be selected among: calcium, magnesium, sodium, ammonium, chloride, gluconate, lactate, sulfate, carbonate, phosphate, or combination thereof. When the concentration of a polyvalent ion is mentioned herein, it preferably refers to the concentration of the polyvalent ion as such.

The polyvalent ion can be present in the first composition at a concentration of at least 0.001% in weight compared to the wet weight of the first composition, preferably at least 0.002 % in weight, more preferably at least 0.005 % in weight and even more preferably at least 0.01 % in weight, compared to the total wet weight of the first composition.

The maximum concentration of the polyvalent ion is usually directed by the solubility of the polyvalent ion. For example, the polyvalent ion can be present in the first composition at a concentration of at most 3 % in weight compared to the wet weight of the first composition, preferably at most 2 % in weight, more preferably at most 1.0 % in weight and even more preferably at most 0.5 % in weight, compared to the total wet weight of the first composition.

Hence, the polyvalent ion can be present in the first composition at a concentration from 0.001 to 3 % in weight compared to the wet weight of the first composition. Preferably, the polyvalent ion is present in the first composition at a concentration from 0.002 to 2.0 % in weight compared to the wet weight of the first composition; more preferably from 0.005 to 1.0 % in weight, compared to the total wet weight of the first composition, even more preferably from 0.01 to 0.5 % in weight, compared to the total wet weight of the first composition.

It should be noted that the first composition comprises one or several polyvalent ions. At least one should, by its nature and/or concentration, allow the formation of a heat-resistant gel with the polyelectrolyte.

**Hence, as shown in** **figure 1****,** a method 100 of producing an edible protein thread according to the invention comprises a step of **preparing a second composition 140.**

This step is particularly designed to prepare a second composition that is complementary to the first composition to form a protein thread with the expected texture when contacting the two compositions. Hence, such a step contributes to the resolution of the problems solved by the invention.

In particular, the step of preparing a second composition 140 comprises adding in the second composition a polyelectrolyte that can form a heat-resistant complex when complexed with the polyvalent ion added in the first composition.

As mentioned, in the meaning of the invention, the polyelectrolyte and the polyvalent ion are complementary ingredients which form a heat-resistant gel when combined.

### Polyelectrolyte

As mentioned, the polyelectrolyte adapted to form the heat-resistant gel can be added to the second composition. Preferably the second composition is an aqueous composition.

The second composition can comprise at least 0.01 % in weight of polyelectrolyte compared to the total wet weight of the second composition. Preferably, the second composition can comprise at least 0.02 % in weight of polyelectrolyte compared to the total wet weight of the second composition; more preferably at least 0.05 % in weight, even more preferably at least 0.1 % in weight, compared to the total wet weight of the second composition. When the concentration of a polyelectrolyte is mentioned herein, it preferably refers to the concentration of the polyelectrolyte salt.

The second composition can comprise at most 15 % in weight of polyelectrolyte compared to the total wet weight of the second composition. Preferably, the second composition can comprise at most 10 % in weight of polyelectrolyte compared to the total wet weight of the second composition; more preferably at most 5 % in weight, even more preferably at most 3 % in weight, compared to the total wet weight of the second composition.

The second composition can comprise from 0.01 % to 15 % in weight of polyelectrolyte compared to the total wet weight of the second composition. Preferably, the second composition can comprise from 0.02 % to 10 % in weight of polyelectrolyte compared to the total wet weight of the second composition; more preferably from 0.05 % to 5 % in weight, even more preferably from 0.1 % to 3 % in weight, compared to the total wet weight of the second composition.

As mentioned, the polyelectrolyte is a heat-resistant gel-forming polyelectrolyte. Preferably, also, the polyelectrolyte is not a heat-activable gel-forming polyelectrolyte; more preferably, the polyelectrolyte is a polysaccharide.

For example, the polyelectrolyte does not need a heat treatment at a temperature above 80°C, preferably above 60°C, to be activated. Alternatively, the polyelectrolyte could be pre-activated prior to adding to the second composition.

Also, since it is intended for human consumption, the polyelectrolyte is digestible by the human digestive system.

For example, the polyelectrolyte is either cationic (e.g. chitosan) or anionic (e.g. alginate). Preferably, when the polyelectrolyte is an anionic polyelectrolyte then the polyvalent ion is a polyvalent cation. Also, when the polyelectrolyte is a cationic polyelectrolyte then the polyvalent ion is a polyvalent anion. More preferably, the polyelectrolyte is an anionic polysaccharide.

It is not necessary that all the monomers of the polyelectrolyte carry an ionisable group. For example, the polyelectrolyte is a polymer having at least 10 % of its monomers bearing an ionisable group, preferably at least 20 %, more preferably at least 30 % and even more preferably at least 40 %. Preferably, the ionisable group is selected from amine, carboxylic, sulphate, or phosphate groups.

For example, the polyelectrolyte is a polymer having at least 10 % of its monomers that can be negatively charged, preferably at least 20%, more preferably at least 30%, for example all the monomers can be negatively charged. Preferably, a monomer that can be negatively charged comprises at least one anionic group. Preferably, the anionic group is selected from carboxylic, sulphate, or phosphate groups, more preferably the anionic group is a carboxylic group.

For example, the polyelectrolyte is a polymer having at least 10 % of its monomers that can be positively charged, preferably at least 20%, more preferably at least 30%, even more preferably at least.40%, for example all the monomers can be positively charged. Preferably, a monomer that can be positively charged comprises at least one cationic group. Preferably, the cationic group is an amine.

Preferably, the polyelectrolyte is a high molecular weight polyelectrolyte. For example, the polyelectrolyte has an average molar mass of at least 2 kg.mol⁻¹. Preferably, the polyelectrolyte has an average molar mass of at least 10 kg.mol⁻¹; more preferably, the polyelectrolyte has an average molar mass of at least 20 kg.mol⁻¹; even more preferably the polyelectrolyte has an average molar mass of at least 30 kg.mol⁻¹.

For optimized texture, the polyelectrolyte molecular weight should not be too high. For example, the polyelectrolyte has an average molar mass of at most 3000 kg.mol⁻¹. Preferably, the polyelectrolyte has an average molar mass of at most 2500 kg.mol⁻¹; more preferably, the polyelectrolyte has an average molar mass of at most 2000 kg.mol⁻¹; even more preferably the polyelectrolyte has an average molar mass of at most 1500 kg.mol⁻¹.

Hence, for example, the polyelectrolyte has an average molecular mass from 2 kg.mol⁻¹ to 3000 kg.mol⁻¹. Preferably, the polyelectrolyte has an average molar mass from 10 kg.mol⁻¹ to 2500 kg.mol⁻¹; more preferably, the polyelectrolyte has an average molar mass from 20 kg.mol⁻¹ to 2000 kg.mol⁻¹; even more preferably the polyelectrolyte has an average molar mass from 30 kg.mol⁻¹ to 1500 kg.mol⁻¹.

The average molecular weight of the polyelectrolyte can be measured by size exclusion chromatography coupled with light scattering. Preferably, it can be measured by following the instructions of the international norm ISO 16014-5:2019.

The present invention can use several polyelectrolytes. However, some polyelectrolytes are preferred. Preferably, the polyelectrolytes are selected from: low methoxyl pectin, low methoxyl pectin derivatives, high methoxyl pectin, high methoxyl pectin derivatives, alginate, alginate derivatives, xanthan, xanthan derivatives, chitosan, chitosan derivatives, ionic carboxymethyl-cellulose derivatives, ionic pullulan derivatives, ionic dextran derivatives, ionic starch derivatives, or a combination thereof or a combination thereof.

More preferably the polyelectrolyte is selected from alginate, alginate derivatives, low methoxyl pectin, low methoxyl pectin derivatives, chitosan, chitosan derivatives or combination thereof.

Even more preferably the polyelectrolyte is selected from alginate, low methoxyl pectin, chitosan, or combination thereof.

### Supplements

The first composition or the second composition, preferably the first composition, can further comprise a cross-linking molecule such as peptidase, α-galactosidase, alcalase, thermolysin, pepsin, tripsin, chymotrypsin, asparaginase, elastase, subtilisin, glucose oxidase, laccase, transglutaminase, pectin esterase, sortase, tyrosinase, oxidoreductase such as lysyl oxidase and peroxidase, genipin, riboflavin, mono amine oxidase or a combination thereof, preferably further comprises laccase, transglutaminase or a combination thereof. Such molecules can act as a natural cross-linking agent and help to modulate physical properties of protein threads.

As mentioned in the example, the presence of supplemented fat, such as non-animal fat, in the first composition can improve the properties of the produced protein threads. Hence, advantageously, the step of preparation of the first composition further comprises an addition of fat, such as non-animal fat. Preferably the supplemented fat is plant fat, or fermentation-obtained fat.

For example, the first composition can comprise at least 1 % in weight of supplemented fat, preferably plant fat or fermentation-obtained fat, compared to the total wet weight of the first composition. Preferably, at least 2 % in weight of supplemented fat compared to the total wet weight of the first composition, more preferably at least 5 % in weight, even more preferably at least 10 % in weight, compared to the total wet weight of the first composition. However, the quantity of supplemented fat should not be too high. For example, the first composition can comprise at most 50 % in weight of supplemented fat compared to the total wet weight of the first composition. Preferably, at most 40 % in weight of supplemented fat compared to the total wet weight of the first composition, more preferably at most 30 % in weight, even more preferably at most 25 % in weight, compared to the total wet weight of the first composition.

Hence, the first composition can comprise from 1 % to 50 % in weight of supplemented fat compared to the total wet weight of the first composition. Preferably, from 2 % to 40 % in weight of supplemented fat compared to the total wet weight of the first composition, more preferably from 5 % to 30 % in weight, even more preferably from 10 % to 25 % in weight, compared to the total wet weight of the first composition.

For example, the first composition can further comprise plant fat, preferably the plant fat comprise fat or oil extracted from edible plant matter, including the flowers, fruits, stems, leaves, roots, germs and seeds, more preferably, the plant fat comprises fat or oil extracted from oilseeds or fruits; in particular, the plant fat comprises fat extracted from canola seed (rapeseed), castor, coconut, flaxseed, allanblackia, olive, sunflower, soybean, peanut, illipe, cottonseed, shea, palm, avocado, safflower, sesame, lemon, grapeseed, macadamia, almond, sal, kokum, or mango or a combination thereof.

In particular, the plant fat used according to the invention can be selected from olive oil, palm oil, sunflower oil, avocado oil, almond oil or combination thereof.

The fermented fat can comprise fat or oil extracted from cells cultivated in anaerobic or aerobic fermentation process, in particular process involving cultivation of oleaginous microorganisms or animal cells excluding human cells. For example, the fermented fat can include fat from cyanobacteria, microalgae, yeast, fungi such as filamentous fungi, bacteria or cultivated animal cells excluding human cells, such as adipocytes. Preferably, the fermented fat comprises fat or oil extracted from oleaginous yeast, such as *Rhodosporidium toruloides, Lipomyces starkeyi* and *Yarrowia lipolytica.*

Preferably, the supplemented fat is mainly constituted of triglycerides with at least 60 % in weight of triglycerides compared to the total weight of fat. More preferably the supplemented fat comprises fatty acids, for example fatty acids in the form of triglycerides, said fatty acids being selected from: butyric acid, isobutyric acid, isovaleric acid, caproic acid, caprylic acid, pelargonic acid, capric acid, lauric acid, myristic acid, palmitic acid, oleic acid, docosahexaenoic acid, stearic acid, arachidic acid, linoleic acid, linolenic acid, arachidonic acid, palmitoleic acid and eicosapentaenoic acid or a mixture of thereof.

As shown in **figure 1****,** a method according to the invention can comprise **a step of adding a food additive 150.** The food additive can be added to the first composition, the second composition or both. This step is in particular designed to improve the flavor, the texture, the appearance or the shelf-life of the protein threads. The first or second composition may comprise between 0.01 and 25% in weight of food additive compared to the total wet weight of the related composition, preferably between 0.01 and 10% in weight of food additive compared to the total wet weight of the related composition. In turn, the protein threads may comprise between 0.01 and 10% in weight of food additive compared to the total weight of the thread, preferably between 0.01 and 4% in weight of food additive compared to the total weight of the thread.

The food additive can be selected from seasoning, flavoring additive, texturizing additive, food colorant, preservative additive or a combination thereof.

A food additive can be for example seasoning, mineral salt, flavoring additive, humectant additive, texturizing additive, anti-foaming agent, emulsifying additive, firming agent, gelling agent, stabilizing additive, thickening agent, food colorant, preservative additive or a combination thereof.

A seasoning can for example be selected from: salt; pepper; aromatic herbs and/or spices, including rosemary, sage, mint, oregano, parsley, thyme, bay leaf, cloves, basil, chives, marjoram, nutmeg, cardamom, chiles, cinnamon, fennel, fenugreek, ginger, saffron, vanilla and coriander; alcohol, including wine such as jurangon, sauterne or pacherenc, spirituous such as cognac or armagnac; or any combination thereof.

A flavoring additive can for example be selected from: flavor enhancer, sweetener, or any combination thereof.

A texturizing additive can for example be selected from: bulking agent or thickener, desiccant, curing agent or any combination thereof. For example, the first composition can further comprise a texturizing additive such as carrageenan, pectin, pullulan, dextran, starch.

A preservative additive can for example be selected from: antimicrobial agent, pH modulator, or any combination thereof.

A food colorant can for example be selected from colorants extracted from natural sources such as carotenes, anthocyanins, tomato (lycopene) , beetroot ( betacyanins and betaxanthins), or a mixture of thereof. The edible food product may comprise between 0.01% and 4% of food colorants compared to the total weight of the edible food product.

The first and the second composition can undergo various preparations to improve the efficiency of protein threads formation. The drawings and the present description should not be understood as limiting the invention to an embodiment wherein the first composition is prepared before the second composition. The person skilled in the art knows that, within the scope of the invention, the second composition can also be prepared before the first composition or concomitantly.

The steps of preparation of the first or the second composition can comprise an adjustment of the pH of any of said compositions. For example, the first composition has a pH comprised between 2 and 12, preferably 3 and 11, more preferably between 4 and 10, even more preferably between 5 and 9. For example, the second composition has a pH comprised between 2 and 12, preferably 3 and 11, more preferably between 4 and 10, even more preferably between 5 and 9.

As it has already been mentioned, the temperatures to which the compositions prepared and used in the context of the invention are subjected have a marked effect on the quality of the protein threads produced.

Preferably, the first composition is not heated at a temperature of 65°C or above for a duration of more than 10 minutes, preferably the first composition is not heated at a temperature of 60°C or above, more preferably of 55°C or above, even more preferably of 50°C or above; for a duration of more than 10 minutes.

For example, the temperature of the first composition during its preparation step is lower than 65°C, preferably lower than 60°C, more preferably lower than 55°C, even more preferably lower than 50°C.

Preferably, the second composition is not heated at a temperature above 85°C for a duration of more than 10 minutes, preferably above 75°C, more preferably above 65°C, even more preferably above 55°C; for a duration of more than 10 minutes.

For example, the temperature of the second composition during its preparation step is at most 85°C, preferably at most 75°C, more preferably at most 65°C, even more preferably at most 55°C.

The first and second composition can also undergo physical treatment such as blending, mixing, homogenizing, sieving, or sonication. Preferably, the steps of preparation of the first or the second composition can comprise a blending or homogenising or emulsifying or stirring steps. These steps are in particular designed to homogenise or to mix all the components together. Also, these steps can result in a, at least partial, disruption of the cultivated animal cells, when present. The steps of preparation of the first composition can comprise a disruption of the membrane of the non-human animal cells. Hence, the homogenising step can be a blending. It can for example be used when the first or the second composition has been supplemented with other ingredients such as plant material or food additives.

Preferably, the homogenising or blending or emulsifying, or stirring step is performed with a high-speed mixer, or with a homogenizer, as a rotor-stator homogenizer, a cutter or a colloid mill.

The homogenising may be conducted during at least 30 seconds, preferably at least 1 min, more preferably at least 2 min; for example, at least 10 min. The homogenising step may be conducted during at most one hour, preferably at most 45 min, more preferably at most 30 min; even more preferably at most 10 min; for example, at most 2 min. Hence, the homogenising may be conducted during 30 sec to 60 min, preferably during 1 min to 45 min, more preferably during 2 min to 30 min; for example during about 10 minutes.

The homogenising may be conducted at least at 100 rpm, preferably at least 1000 rpm, more preferably at least 2000 rpm; for example, at least 5000 rpm. The homogenising may be conducted during at most at 30 000 rpm, preferably at most 25 000 rpm, more preferably at most 20 000 rpm; for example, at most at 15 000 rpm. Hence, the homogenising may be conducted at 100 rpm to 30 000 rpm, preferably at 1000 rpm to 25 000 rpm, more preferably at 2 000 rpm to 20 000 rpm; even more preferably at 5 000 rpm to 15 000 rpm. The homogenisation preferably induces an emulsion, more preferably a microemulsion in the first composition.

In particular, in a preferred embodiment, as it is illustrated in examples, the **first composition** can comprise:
- at least 10 % in weight of total proteins with respect to the total wet weight of the first composition, including at least 5 % of non-human animal proteins with respect to the total protein weight, said animal proteins being. from non-human cultivated animal cells, and
- at least 0.001 % in weight of the polyvalent ion with respect to the total wet weight of the first composition.

Preferably, as it is illustrated in examples, the first composition can comprise:
- at least 10 % in weight of total proteins with respect to the total wet weight of the first composition, including at least 5 % of non-human animal proteins with respect to the total protein weight, said animal proteins being from non-human cultivated animal cells, and
- at least 0.001 % in weight of the polyvalent ion with respect to the total wet weight of the first composition, and
- at least 1 % of plant fat or fermentation-obtained fat, with respect to the total wet weight of the first composition.

More preferably, the first composition can comprise:
- at least 10 % in weight of total proteins with respect to the total wet weight of the first composition, including at least 5 % of non-human animal proteins with respect to the total protein weight, said animal proteins being from non-human cultivated animal cells, and at least 0.25 % in weight of myofibrillar proteins compared to the total weight of proteins, and
- at least 0.001 % in weight of the polyvalent ion with respect to the total wet weight of the first composition.

More preferably, as it is illustrated in examples, the first composition can comprise:
- at least 10 % in weight of total proteins with respect to the total wet weight of the first composition, including at least 5 % of non-human animal proteins with respect to the total protein weight, said animal proteins being from non-human cultivated animal cells, and at least 0.25 % in weight of myofibrillar proteins compared to the total weight of proteins;
- at least 0.001 % in weight of the polyvalent ion with respect to the total wet weight of the first composition; and
- at least 1 % of plant fat or fermentation-obtained fat, with respect to the total wet weight of the first composition.

Even more preferably, the first composition can comprise:
- at least 10% in weight of total proteins with respect to the total wet weight of the first composition, including at least 5 % of non-human animal proteins with respect to the total protein weight, said animal proteins being from non-human cultivated animal cells, and at least 0.25 % in weight of myofibrillar proteins compared to the total weight of proteins;
- at least 0.001 % in weight of the polyvalent ion with respect to the total wet weight of the first composition; and
- at least one cross-linking molecule.

Even more preferably, as it is illustrated in examples, the first composition can comprise:
- at least 10 % in weight of total proteins with respect to the total wet weight of the first composition, including at least 5 % of non-human animal proteins with respect to the total protein weight, said animal proteins being from non-human cultivated animal cells, and at least 0.25 % in weight of myofibrillar proteins compared to the total weight of proteins, .
- at least 0.001 % in weight of the polyvalent ion with respect to the total wet weight of the first composition, and
- at least one cross-linking molecule, and
- at least 1 % of plant fat or fermentation-obtained fat, with respect to the total wet weight of the first composition.

Even more preferably, as it is illustrated in examples, the first composition can comprise:
- at least 10 % in weight of total proteins with respect to the total wet weight of the first composition, including at least 5 % of non-human animal proteins with respect to the total protein weight, said animal proteins being from non-human cultivated animal cells,
- at least 0.001 % in weight of the polyvalent ion with respect to the total wet weight of the first composition, and
- at least one cross-linking molecule, and
- at least 1 % of plant fat or fermentation-obtained fat, with respect to the total wet weight of the first composition, and
- at least one extracellular matrix non-human animal molecule, preferably at least 0.1 % in weight of extracellular matrix animal molecules compared to the total weight of proteins.

Preferably, as it is illustrated in examples, the second composition is an aqueous composition.

In particular, in another embodiment, as it is illustrated in examples, the second composition can comprise at least 0.01 % in weight of the polyelectrolyte with respect to the total wet weight of the first composition.

Preferably, the second composition can comprise:
- at least 0.01 % in weight of the polyelectrolyte with respect to the total wet weight of the first composition, and
- at least one cross-linking molecule.

**As shown in** **figure 1****,** a method 100 of producing an edible protein thread according to the invention comprises a **step of contacting 160 the first composition with the second composition.** This step is in particular designed to form an edible protein thread. More particularly, several edible protein threads that can be prepared concomitantly.

Advantageously, as illustrated in the examples, the temperature of the first composition when contacting the second composition is lower than 80°C. Preferably, the temperature of the first composition when contacting the second composition is lower than 75°C, more preferably lower than 70°C, even more preferably lower than 65°C.

Moreover, once prepared, the first composition should not undergo a heat treatment at a temperature higher than 80°C, preferably, higher than 75°C, more preferably higher than 70°C, even more preferably higher than 65°C.

For example, the temperature of the first composition used during the contacting 160 step, is from 1°C and 80°C, preferably from 3°C and 60°C, more preferably from 3°C to 50°C, even more preferably from 3°C to 45°C.

It has been shown that the second composition can be used at a higher temperature with no effect on the qualities of the edible protein threads produced. Hence, the temperature of the second composition when contacting the first composition can be higher than 35 °C. However, the temperature of second composition when contacting with the first composition should preferably be of at most 85°C, more preferably at most 75°C, even more preferably at most 65°C.

The step of contacting 160 the first composition with the second composition can be performed by known methods such as extrusion spinning, gel spinning, melt spinning, centrifugal spinning, bath-assisted 3D printing, wet spinning or a dry jet wet spinning. Preferably, the step of contacting 160 the first composition with the second composition is performed by wet spinning or a dry jet wet spinning, bath-assisted 3D printing. More preferably, the step of contacting 160 the first composition with the second composition is performed by wet spinning or a dry jet wet spinning.

In particular, the step of contacting 160 the first composition with the second composition can comprise impregnating a thread made of the first composition with the second composition and preferably immersing a thread made of the first composition in a bath made of the second composition. Preferably, a flow could be created in the second composition (for example through a vortex collector) and/or the threads could be spooled (can be advantageously done so they are straightened up).

In particular, the step of contacting 160 comprises an immersion of the first composition in the second composition and the formation of the edible protein thread in a bath made of the second composition.

The step of contacting 160 the first composition with the second composition can be performed during at least 10 ms, preferably during at least 100 ms, more preferably during at least 500 ms, even more preferably during at least 1 second.

The step of contacting 160 the first composition with the second composition can be performed during at most 20 minutes, preferably during at most 10 minutes, more preferably during at most 5 minutes, even more preferably during at most 4 minutes.

Hence, the step of contacting 160 the first composition with the second composition can be performed during from 10 ms to 20 min preferably during from 100 ms to 10 minutes more preferably during from 500 ms to 5 minutes, even more preferably during from 1 second to 4 minutes.

As shown in **figure 1****,** a method according to the invention can comprise a **step of transforming 170 the edible protein thread.**

This step is in particular designed to prepare the edible protein threads so that they are suitable for the subsequent steps, in particular for the manufacture of an edible food product which can be an edible meat substitute. Also, the step of transforming the edible protein threads can also comprise a combination of the edible protein threads with another food matrix.

For example, the protein threads can undergo further processing such as marination, crushing, squishing, braiding, cutting, mincing, grinding, mixing, shredding, squeezing, dosing, molding, pressing, 3D printing, extruding baking or cooking steps such as smoking, roasting, frying, surface treatment, coating or also combination with other ingredients, in order to produce an edible food product which mimics known conventional meat products. In particular, the edible product can be an alternative product to the meat which aims to imitate a known meat product, transformed or not.

Also, a method according to the invention can comprise a step of combining the protein threads with another food matrix such as a fatty matrix, protein matrix, a carbohydrate matrix, a plant matrix and/or a fibrous matrix.

As shown in **figure 1****,** a method according to the invention can comprise **a step of conditioning 180 an edible food product comprising the edible protein thread.**

This step is in particular designed to obtain an edible food product having meat-like properties, such as meat-like organoleptic properties in particular meat-like texture and flavor.

According to the invention, the step of conditioning 180 the edible food product can comprise steps such as steps that affect water content, shape, texture, flavour or even shelf life of the edible food product.

For example, according to the invention, the step of conditioning 180 the edible food product can comprise steps such as drying, desiccation, dehydration, lyophilization, filtering or a combination thereof.

For example, according to the invention, the step of conditioning 180 the edible food product can comprise steps such as sterilisation or pasteurisation.

Finally, according to the invention, the step of conditioning 180 the edible food product can comprise steps such as cooling, refrigeration, deep-freezing, packaging or a combination thereof.

In **another aspect,** the invention relates to **an edible protein thread obtainable** from a method according to the invention. Preferably, the edible protein thread has been obtained by a method according to the invention.

In particular, this edible protein thread comprises non-human animal proteins, said non-human animal proteins being cultivated non-human animal cell proteins. Furthermore, this edible protein thread may comprise a heat-resistant gel formed by a polyelectrolyte combined with a suitable polyvalent ion.

Hence, the invention preferably relates to an edible protein thread obtainable from a method according to the invention, said edible protein thread comprising animal proteins and a polyelectrolyte forming a heat-resistant, said animal proteins being cultivated non-human animal cell proteins.

Advantageously, this edible protein thread has an improved meat-like flavor and/or meat-like texture compared to edible protein thread made from plant proteins only. In particular it may have a soft, gelatinous outer shell.

Preferably, the protein thread of the invention comprises, whether preferred or not preferred embodiment described earlier in the description of a method according to the invention. Hence, a protein thread according to the invention may comprise, alone or in combination, each of the features described above in connection with a method according to the invention and any of its above mentioned steps.

We have already presented in detail the general and preferred characteristics of each of the constituents of the protein thread and of the edible food product according to the invention. These embodiments are applicable both to the edible protein thread and to the edible food product according to the invention. Some are mentioned below to emphasize their importance.

Advantageously, the edible protein thread has been produced from cultivated non-human animal cells. Hence, as it is detailed hereafter, the edible protein thread according to the invention can comprise intact cultivated cells, disrupted cultivated cells and/or extracts of cultivated cells (such as extracts of disrupted cultivated cells), said cells being cultivated cells from an organism of the *Animalia* kingdom excluding human. However, considering the preferred embodiments of the method according to the invention to produce the edible protein threads, the edible protein thread may not contain intact cultivated cells.

The protein thread can comprise at least 0.25 % in weight of myofibrillar proteins compared to the total weight of proteins, preferably at least 0.5 % in weight of myofibrillar proteins, more preferably at least 1 % in weight of myofibrillar proteins, even more preferably at least 2% weight of myofibrillar proteins compared to the total weight of proteins in the protein thread. The protein thread can comprise at most 70 % in weight of myofibrillar proteins compared to the total weight of proteins, preferably at most 60 % in weight of myofibrillar proteins, more preferably at most 50 % in weight of myofibrillar proteins, even more preferably at most 40% in weight of myofibrillar proteins compared to the total weight of proteins in the protein thread. Hence, the protein thread can comprise between 0.25% and 70% in weight of myofibrillar proteins compared to the total weight of proteins, preferably between 0.5 % and 60% in weight of myofibrillar proteins, more preferably between 1 % and 50 % in weight of myofibrillar proteins, even more preferably between 2 % and 40 % in weight of myofibrillar proteins compared to the total weight of proteins in the protein thread.

The concentration of myofibrillar proteins in the protein thread can also be considered regarding the concentration of polyelectrolyte. This ratio can be controlled to optimize the behavior of the protein threads. Hence, the protein thread can comprise myofibrillar proteins (from cultivated cells) and polyelectrolyte at concentrations so that a ratio of myofibrillar proteins weight on polyelectrolyte is of at least 2.5, preferably 5, more preferably 7.5, even more preferably 10. However, the protein thread can comprise myofibrillar proteins and polyelectrolyte at concentrations so that a ratio of myofibrillar proteins weight on polyelectrolyte weight is of at most 100, preferably at most 50, more preferably at most 40, even more preferably at most 30. Hence, the protein thread can comprise myofibrillar proteins and polyelectrolyte at concentrations so that a ratio of myofibrillar proteins weight on polyelectrolyte weight is from 2.5 to 100, preferably from 5 to 50, more preferably from 7.5 to 40, even more preferably from 10 to 30.

As mentioned, myofibrillar proteins can be quantified by mass spectrometry like the polyelectrolyte.

The protein thread can comprise at least 0.01 % in weight of polyelectrolyte compared to the total wet weight of the protein thread. Preferably, the protein thread can comprise at least 0.02 % in weight of polyelectrolyte compared to the total wet weight of the protein thread; more preferably at least 0.05 % in weight, even more preferably at least 0.01 % in weight, compared to the total wet weight of the protein thread.

The protein thread can comprise at most 15 % in weight of polyelectrolyte compared to the total wet weight of the protein thread. Preferably, the protein thread can comprise at most 10 % in weight of polyelectrolyte compared to the total wet weight of the protein thread; more preferably at most 5 % in weight, even more preferably at most 3 % in weight, compared to the total wet weight of the protein thread.

The protein thread can comprise from 0.01 % to 15 % in weight of polyelectrolyte compared to the total wet weight of the protein thread. Preferably, the protein thread can comprise from 0.02 % to 10 % in weight of polyelectrolyte compared to the total wet weight of the protein thread; more preferably from 0.05 % to 5 % in weight, even more preferably from 0.01 % to 3 % in weight, compared to the total wet weight of the protein thread.

The protein thread can comprise troponin protein preferably at least 0.0125 % in weight of troponin protein compared to the total weight of proteins in the protein thread, preferably at least 0.025%, more preferably at least 0.05%, even more preferably at least 0.1% compared to the total weight of proteins in the protein thread.

The protein thread can comprise collagen, preferably at least 1 % in weight of collagen compared to the total weight of proteins in the protein thread, preferably at least 2 %, more preferably at least 3 %, even more preferably at least 4 % compared to the total weight of proteins in the protein thread.

The protein thread can comprise elastin and/or tropoelastin, preferably at least 0.065 % in weight of elastin and/or tropoelastin compared to the total weight of proteins in the protein thread, preferably at least 0.130 %, more preferably at least 0.2 %, even more preferably at least 0.25 % compared to the total weight of proteins in the protein thread.

As it has been described, the method according to the invention can comprise an addition of supplemented fat, preferably plant fat or fermentation-obtained fat, in the edible protein thread. Hence, the edible protein thread according to the invention can comprise fat, preferably plant fat or fermentation-obtained fat.

For example, an edible protein thread according to the invention comprises at least 1 % in weight of fat compared to the total wet weight of the edible protein thread. Preferably, at least 2 % in weight of fat compared to the total wet weight of the edible protein thread, more preferably at least 5 % in weight, even more preferably at least 10 % in weight compared to the total wet weight of the edible protein thread. However, the quantity of fat should not be too high. For example, the edible protein thread can comprise at most 50 % in weight of fat compared to the total wet weight of the edible protein thread. Preferably, at most 40 % in weight of fat compared to the total wet weight of the protein thread, more preferably at most 30 % in weight, even more preferably at most 25 % in weight compared to the total wet weight of the edible protein thread.

Hence, the edible protein thread can for example comprise from 1 % to 50 % in weight of fat compared to the total wet weight of the edible protein thread. Preferably, from 2 % to 40 % in weight of fat compared to the total wet weight of the edible protein thread, more preferably from 5 % to 30 % in weight, even more preferably from 10 % to 25 % in weight compared to the total wet weight of the edible protein thread.

The edible protein thread according to the invention has preferably a shape and/or mechanical properties that allow it to mimic the behavior of a conventional meat from a slaughtered animal when cooked and tasted.

For example, an edible protein thread according to the invention has a length of at least 2 mm, preferably at least 10 mm, more preferably at least 50 mm, even more preferably at least 100 mm.

For example, an edible protein thread according to the invention has a diameter of at most 4 mm, preferably at most 2 mm, more preferably at most 1 mm, even more preferably at most 0.5 mm.

Advantageously, the edible protein thread according to the invention can be considered as an ingredient for an alternative to conventional meat products from a slaughtered animal or an alternative to conventional meat products from a slaughtered animal as such.

An edible protein thread can for example be a ready to eat food product that can be consumed directly, or eventually after a processing step (e.g. crushing, squishing, braiding, cutting, grinding, mixing, shredding, squeezing, dosing, molding, pressing, 3D printing, extruding baking or cooking steps such as smoking, roasting, frying, surface treatment, and/or coating) and/or a cooking step. An edible protein thread can also be an intermediate product to be used in combination with other products to produce a ready to eat food product. In particular, the edible protein thread can be an alternative product to the meat from a slaughtered animal which aims to imitate a conventional meat product (e.g. steak, sausage, pâté...). As it is illustrated in examples, an edible protein thread according to the invention can exhibit an improved meat-like texture and/or meat-like flavor compared to an edible protein thread made from plant proteins.

**In another aspect, the invention relates to a method of manufacturing an edible food product.** In particular, a method of manufacturing an edible food product comprises the use of an edible protein thread according to the invention. As already mentioned, such edible food product can be considered as an edible meat substitute.

In a preferred embodiment, a method of manufacturing an edible food product comprises assembling one or several of the produced edible protein threads according to the invention into an edible food product.

In a more preferred embodiment, a method of manufacturing an edible food product comprises: a) producing one or several edible protein threads according to the invention; and b) assembling one or several of the manufactured edible protein threads into an edible food product.

The edible food product according to the invention is preferably a processed food product. Indeed, it will not consist in slaughtered animal flesh as such and is preferably result from a combination of edible substances from different organism sources (e.g. an hybrid product combining proteins from *Animalia* kingdom and fat from *Plant* kingdom, or combining proteins from *Plant* and/or *Animalia* and/or *Fungi* and/or *Bacteria* kingdoms and fat from *Plant* and/or *Animalia* and/or *Fungi* and/or *Bacteria* kingdoms).

A food manufacturing can comprise several other steps such as: blanching, heat sterilisation, evaporation and distillation, dehydration, smoking, baking and roasting, frying, high pressure processing, Pulsed Electric Field (PEF) processing, ultrasound/ cavitation / shock wave processing, pasteurisation, application of cold plasma, dielectric, ohmic and infrared processing, microwave heating / blanching / assisted extraction, food irradiation, UV microbial inactivation, pulsed light technology, supercritical extractions, extrusion, freezing, chilling, modified atmospheres, drying technologies (freeze drying, membranes), fermentation, homogenization, mincing, grinding, chopping, salting, tumbling, curing, brine injection.

**In another aspect, the invention relates to an edible food product obtainable from the manufacturing method according to the invention.** Preferably, the edible food product has been obtained by a method according to the invention.

In particular, this edible food product comprises edible protein threads according to the invention.

In aspect, the invention relates to **a system 10 for producing an edible protein thread according to the invention.**

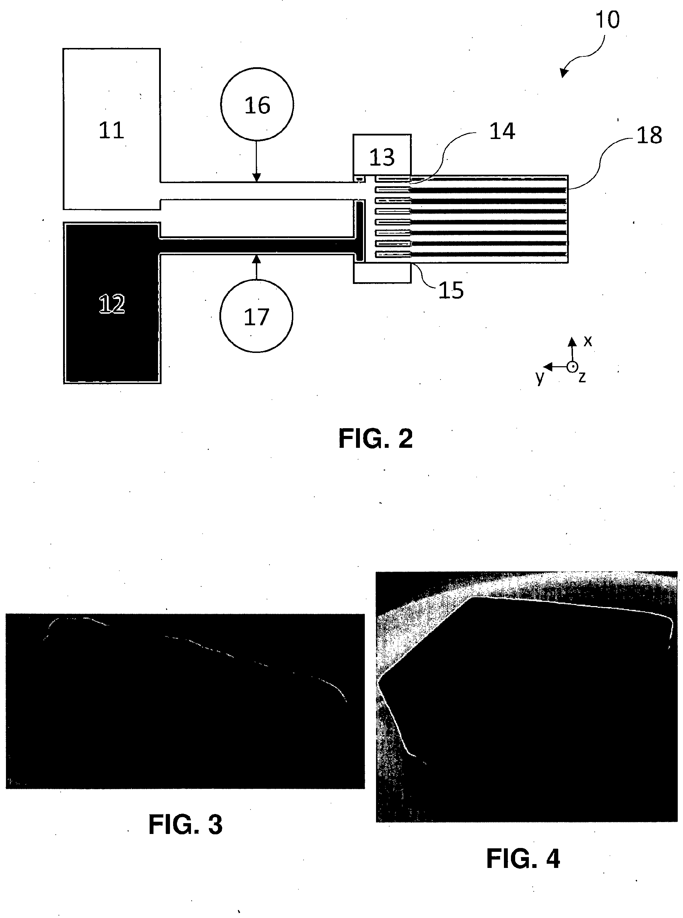

As illustrated in figure 2, the system 10 according to the invention can comprise a first composition container 11 capable of containing a first composition, said first composition comprising proteins.

The first composition container 11 can be made of food grade plastics, ceramics, glasses, silicons, stainless steel, or combination thereof. The first composition container 11 can be associated with a temperature controller configured to measure and modify the temperature of the first composition. The first composition container 11 can be associated with a pressure controller configured to measure the pressure inside the first composition container.

As illustrated in figure 2, the system 10 according to the invention can comprise a second composition container 12 capable of containing a second composition. The second composition container 12 can be made of food grade plastics, ceramics, glasses, silicons, stainless steel, or combination thereof. The second composition container 12 can be associated with a temperature controller configured to measure and modify the temperature of the second composition.

As illustrated in figure 2, the system 10 according to the invention comprises a contacting device 13. Advantageously, the contacting device 13 is arranged to be able to bring in contact the first composition with the second composition to form edible protein threads, preferably from the first composition.

Preferably, the contacting device is configured to bring in contact the first composition with the second composition to form an edible protein thread, said contacting device being arranged to inject the first composition into the second composition in at least one injection site and the system being configured to induce a movement of the at least one injection site of the first composition into the second composition relative to the second composition, and/or the second composition relative to the at least one injection site of the first composition into the second composition.

Advantageously, the contacting device 13 has one or several holes 14connected to the first composition container 11, said one or several holes being arranged to allow the first composition to be brought into contact with the second composition while being in the form of thread. Holes 14 can have an area lower than 4 mm², preferably lower than 3.5 mm², more preferably lower than 2 mm², more preferably lower than 1 mm², even more preferably lower than 0,5 mm². Holes can have an irregular or determined shape such as rectangular, round, oval.... More preferably, the contacting device 13 is configured to be able to induce, during a contacting step, a displacement of the one or several holes 14. This can be used to improve the homogeneous aspect of the protein threads produced. In particular when the displacement of the one or several holes 14 is a displacement in relation to the second composition. For example, the contacting device 13 can comprise one or more needles 15 arranged to perform, preferably with a piston or a pumping device 16, an injection of the first composition into the second composition. In particular, the one or more needles 15 are arranged to be mobile during the injection of the first composition into the second composition. A system according to the invention can also comprise a piston or a pumping device 17 arranged to induce a movement of the second composition.

In one embodiment, the contacting device 13 comprises multiple needles 15 connected to the pumping device 16 associated with the first composition container. Also, several needles 15 can be connected to a shared chamber or each needle 15 can be connected to an independent chamber. Said needles 15 could be arranged in parallel, one to each other, they can all display the same pattern (round, rectangular, oval, irregular) or , present different patterns. Preferably, said needles 15 display different patterns in order to obtain an irregular section of the protein threads fibers, therefore providing a more natural aspect to the food product.

As illustrated in figure 2, the system 10 according to the invention can comprise a production container 18 capable of containing the protein threads.

The production container 18 can be made of food grade plastics, ceramics, glasses, silicons, stainless steel, or combination thereof. The production container 18 can be associated with a temperature controller configured to measure and modify the temperature of the edible food product.

Advantageously, the production container 18 is arranged so as to allow the implementation of a movement of the second composition, preferably a translational or rotational movement of the production container. This can be used to improve the homogeneous aspect of the protein threads produced.

Preferably, the system 10 according to the invention can further comprise a cooling device. Preferably, the system 10 according to the invention can further comprise a spooling device. Preferably, the system 10 according to the invention can further comprise a cutting or a slicer device or a packaging device.

Without further description, it is believed that one of ordinary skills in the art can, using the preceding description and the following illustrative examples, make and utilize the products of the present invention and practice the claimed methods. The following examples, therefore, specifically point out the preferred embodiments of the present invention and are not to be construed as limiting in any way the remainder of the disclosure.

### EXAMPLES

The invention is further described in detail by reference to the following experimental examples. These examples are provided for purposes of illustration only and are not intended to be limiting unless otherwise specified. Thus, the invention should in no way be construed as being limited to the following illustrative examples, but rather, should be construed to encompass any and all variations which become evident as a result of the teaching provided herein.

Without further description, it is believed that one of ordinary skills in the art can, using the preceding description and the following illustrative examples, make and utilize the products of the present invention and practice the claimed methods. The following examples, therefore, specifically point out the preferred embodiments of the present invention, and are not to be construed as limiting in any way the remainder of the disclosure.

### Materials and methods

### Chemicals

Sodium alginate food grade powder, E 401
LMC pectin E440
Gelatin n°CAS 9000-70-8
Chitosan n°CAS 9012-76-4
Calcium chloride n°CAS 10043-52-4
NaCl
Plant fat and/or fermented fat can be obtained through mechanical or chemical extraction from seeds or from other parts of fruit. It can then be purified and, if required, refined or chemically altered. Many commercial references can be used such as a mix of CremoFLEX^{®} L and CremoFLEX^{®} E.
Transglutaminase (TGase) Powder - 125 U/g
Soy protein solution 20 wt%
Elastin - Sigma
Recombinant collagen - Sigma

### Cells culture & preparation

Bovine cells were obtained from biopsies or cultivated cells. Cultivated cells can be bovine embryonic stem cells initially isolated from bovine embryos and adapted to grow in suspension in a serum free and growth factors free medium. These cells are characterised by their property to grow in suspension at a larger scale in bioreactors.

The bovine cells are cultivated in a 30 L stainless steel bioreactor at 37°C, pH 7.1 regulated with CO₂ injection under constant stirring at 50 rpm. Four days post seeding, cells are collected from the bioreactor, submitted to a two-step centrifugation and the dry pellets are weighed.

A protein dosage can be conducted using a Bradford method on a sample of the harvested cells.

The moisture content is measured and can be adjusted. Cells can be used as such. However an additional step such as protein extraction can be performed on harvested cultivated cells.

### First and second composition preparation

The first and the second composition are prepared by mixing the ingredients following mix compositions.

### Contacting the first and second composition to produce the edible protein threads

Protein threads were spinned using a syringe pump (Chemyx), a 10 mL syringe equipped with 18G (0.8 mm) or 14G (1.6 mm) needle or a spinneret comprising several holes. The injection rate was fixed at 5 mL/min.

### Mechanical test

Protein threads were evaluated by tensile testing using a texturometer (Ametek LS1 equipped with a 10 kg load cell). Briefly, protein threads were subjected to an elongation until failure and the force was recorded as a function of the elongated distance. At failure, the measured force drops sharply.

The extension rate was 100 mm/min and measurements were performed on 6 samples for each diameter.

### Evaluation of the effect of the concentration of alginate in the second composition on the protein threads

The objective of this experiment is to evaluate the effect of the concentration of alginate in the second composition.

The first composition is prepared by mixing the ingredients following table 1.

**Table 1. Ingredients of the first composition**

| **Ref** | **Animal proteins from cultivated cells or cell extract wt%** | **Liquid oil wt%** | **NaCl wt%** | **Calcium chloride wt%** | **Water** |
|---|---|---|---|---|---|
| A1 | 80 | 10 | 1 | 0.03 | 8.97 |
| A2 | 80 | 10 | 1 | 0.3 | 8.7 |

The second composition is a coagulation bath comprising 0.5 % or 2% w/w of sodium alginate dissolved in distilled water.

### Results & Conclusions

Regarding the concentration of calcium chloride, threads are obtained for both concentration 0.03% (A1) and 0.3% (A2).

Regarding the concentration of alginate in the second composition, threads are obtained at 0.5% of alginate or 2% of alginate in the second bath. As the 2% alginate bath produces some irregular morphologies on the threads, lower concentrations are recommended.

This method allows the creation of protein thread with the desired mechanical properties. Moreover, the protein threads produced with polyelectrolyte in the second composition have a jelly texture on the outside that could help to recreate the extracellular matrix. This can also improve the texture and mouthfeel.

### Evaluation of the effect of the protein content in the first composition on the protein threads

The objective of this experiment is to illustrate the effect of protein content on the mechanical properties of threads.

The first composition is prepared by mixing the ingredients following table 2.

**Table 2. Ingredients of the first composition**

| Ref | Animal proteins from cultivated cells or cell extracts wt% | Water wt% | Liquid oil wt% | NaCl wt% | Calcium chloride wt% |
|---|---|---|---|---|---|
| B1 | 7.1 | 81.60 | 10 | 1 | 0.3 |
| B2 | 10.56 | 78.14 | 10 | 1 | 0.3 |
| B3 | 13.20 | 75.50 | 10 | 1 | 0.3 |
| B4 | 17.6 | 71.10 | 10 | 1 | 0.3 |

The second composition is a coagulation bath comprising 1% w/w of sodium alginate dissolved in distilled water.

The first composition is used in a spinneret to produce several flows of first composition coming into contact with the second composition used as a coagulation bath.

### Results & Conclusion

Protein threads prepared with the first composition having a protein content of 10.56 wt% (B2), 13.20 wt% (B3) or 17.6 wt% (B4) have significant improved strain at break, load at break, and tensile stress compared to the ones having a protein content of 7.1 wt% (B1).

In particular, protein threads prepared with the first composition having a protein content of 17.6 wt% (B4) have + 12% strain at break, + 47% load at break, and + 51% tensile stress compared to the ones having a protein content of 10.56 wt% (B2).

Hence, when forming protein threads according to the invention, one should preferably use a first composition having at least 10 wt% of protein compared to the total wet weight of the first composition and preferably at least 13 wt%, more preferably at least 17 wt% of protein compared to the wet weight of the composition.

### Evaluation of the effect of the protein origin in the first composition on the protein threads

The objective of this experiment is to evaluate the effect of the protein origin on the mechanical properties of protein threads using tensile testing.

The first composition is prepared by mixing the ingredients following table 3.

**Table 3. Ingredients of the first composition (all ingredients excepted water are expressed in weight/total weight of the composition)**

| **Ref** | **C80** | **C40** | **C0 (comparative exp.)** |
|---|---|---|---|
| Animal proteins from cultivated cells or cell extracts wt% | 17.6 | 8.8 | 0 |
| *Including myofibrillar proteins wt%* | *8.8* | *4.4* | *0* |
| Plant proteins wt% | 0 | 8.8 | 17.6 |

| **Proteins total (wt%)** | **17.6** | **17.6** | **17.6** |
|---|---|---|---|
| *Myofibrillar protein on total proteins* | *0.5* | *0.25* | *0* |
| Liquid oil wt% | 10 | 10 | 10 |
| NaCl wt% | 1 | 1 | 1 |
| Calcium chloride wt% | 0.3 | 0.3 | 0.3 |
| Water wt% | 71.1 | 71.1 | 71.1 |

The plant proteins used in the first composition are soy proteins.

The second composition is a coagulation bath comprising 0.5% w/w of sodium alginate dissolved in distilled water.

The first composition is used in a spinneret to induce the flow of the first composition coming into contact with the second composition used as a coagulation bath.

After incubation at 37°C for 1h, the mechanical properties of the protein threads are evaluated by tensile testing using the texturometer.

### Results & Conclusion

The mechanical properties of the protein threads are illustrated in the table 4 below.

**Table 4. Results from the tensile testing**

| **Ref** | **Strain at break** | **Load at Break** | **Tensile Stress** |
|---|---|---|---|
| C80 | 218% | 312% | 298% |
| C40 | 203% | 195% | 189% |
| C0 | 100% | 100% | 100% |

### Results & Conclusion

Protein threads prepared with bovine proteins (C40; C80) from cultivated cells or cell extracts have higher resistance to traction (tensile testing) than the ones prepared with soy proteins in the same conditions (C0).

This illustrates that protein threads made according to the invention can have desired mechanical properties far above the ones made of plant proteins only.

However, adding some plant proteins can be used to tune the viscoelasticity or flow properties of the first composition comprising non-human animal cultivated cells.

### Evaluation of the effect of the nature of the polyelectrolyte on the protein threads

The objective of this experiment is to determine the effect of the nature of the polyelectrolyte on the protein threads.

The first and the second composition are prepared by mixing the ingredients following table 5 & 6.

**Table 5. Ingredients of the first composition**

| Ref | Animal proteins from cultivated cells or cell extracts wt% | Liquid oil wt% | Calcium chloride wt% | Sodium phosphate dibasic wt% | Water wt% |
|---|---|---|---|---|---|
| D1a | 20 | 10 | 0.5 | 0 | 69.5 |
| D2a | 20 | 10 | 0.5 | 0 | 69.5 |
| D3a | 20 | 10 | 0 | 0.5 | 69.5 |

**Table 6. Ingredients of the second composition**

| **Ref** | **Polyelectrolyte** |
|---|---|
| D1b | 1.1% - Alginate |
| D2b | 1.1% - LMC Pectin |
| D3b | 0.82% - Chitosan |

First composition D1a is contacted with second composition D1b. First composition D2a is contacted with second composition D2b. First composition D3a is contacted with second composition D3b.

The second composition is a coagulation bath comprising a polyelectrolyte either anionic (D1b, D2b) or cationic (D3b) dissolved in distilled water.

No threads are obtained when a coagulation bath comprising gelatin is used. A bath comprising gelatin, which is not capable of complexing with a polyvalent ion to make a heat-resistant gel, does not allow the production of threads.

The first composition is used in a spinneret to induce the flow of the first composition coming into contact with the second composition used as a coagulation bath.

The mechanical properties of the protein threads are evaluated by tensile testing using the texturometer.

### Results & Conclusions

It is possible to form good protein threads with alginate (D1), LMC pectin (D2) and Chitosan (D3).

The mechanical properties of the protein threads are illustrated in the table 7 below. The results of tensile tests are normalized based on the values obtained with the protein threads prepared with an alginate coagulation bath (D1).

**Table 7.**

| **Ref** | **Strain at break** | **Load at Break** | **Tensile Stress** | **Young's modulus** |
|---|---|---|---|---|
| D1 | 100% | 100% | 100% | 100% |
| D2 | 98% | 105% | 110% | 103% |
| D3 | 63% | 48% | 47% | 81% |

Hence, either an interaction between a cationic polyelectrolyte with a polyanion or an anionic polyelectrolyte with a polycation works in a method according to the invention. This stresses the importance of using a gelation mediated by ions (quick polymerization when contacting two solutions).

### Evaluation of the effect of the ExtraCellular Matrix (ECM) molecules on the protein threads

The objective of this experiment is to determine the effect of the presence of extracellular matrix (ECM) molecules on the properties of the protein threads.

The first composition is prepared by mixing the ingredients following table 8.

**Table 8. Ingredients of the first composition**

| **Ref** | **E0** | **E1p** | **E1s** | **E2s** |
|---|---|---|---|---|
| Animal proteins from cells or cell extracts wt% | 17.50 | 17.46 | 17.46 | 17.46 |
| *ECM molecules wt%* | *0* | *0.87 - Elastin* | *0.87 - Elastin Sol* | *0.87 - Collagen Sol* |
| *ECM molecules* / *total proteins* | *0* | *4.75* | *4.75* | *4.75* |
| Liquid oil wt% | 8.81 | 8.73 | 8.73 | 8.73 |
| Salt wt% | 1.32 | 1.31 | 1.31 | 1.31 |
| Calcium chloride wt% | 0.58 | 0.57 | 0.57 | 0.57 |
| Transglutaminase wt% | 0.88 | 0.87 | 0.87 | 0.87 |
| Water | 70.91 | 70.19 | 70.19 | 70.19 |

| | | | | |
|---|---|---|---|---|
| Sol : soluble | | | | |

The second composition is a coagulation bath comprising 0.5% w/w of sodium alginate dissolved in distilled water.

The first composition is used in a spinneret to produce several flows of first composition coming into contact with the second composition used as a coagulation bath.

After incubation at 37°C for 1h, the mechanical properties of the protein threads are evaluated by tensile testing using the texturometer.

### Results & Conclusions

The mechanical properties of the protein threads are illustrated in the table 8 below. The results of tensile tests are normalized based on the values obtained with the protein threads made of animal proteins from cultivated cells without addition of ECM proteins (E0).

**Table 8. Results from the tensile testing**

| **Ref** | **Strain at break** | **Load at Break** | **Tensile Stress** |
|---|---|---|---|
| E0 | 100.00% | 100.00% | 100.00% |
| E1p | 100.52% | 62.99% | 71.41% |
| E1s | 101.12% | 190.11% | 192.42% |
| E2s | 118.19% | 156.13% | 157.43% |

As illustrated in the above table, the addition of elastin as a powder in the first composition has deleterious effects on the load at break and the tensile stress of the produced protein threads (E1p).

However, when elastin is already present in the cells or cell extracts to produce the first composition (E1s), it can improve the load at break and the tensile stress by more than 75%.

Also, the presence of collagen in a soluble form in the first composition improves the load at break, and the tensile stress for the produced threads.

This suggests that ECM molecules, in particular ECM proteins, when present in the first composition, contribute to the tensile strength of the protein threads.

Hence, using non-human animal cultivated cells producing ECM molecules and in particular proteins can help to increase the hardness and the elasticity of the produced protein threads according to the invention.

### Evaluation of the effect of crosslinking molecule on the protein threads

The objective of this experiment is, using tensile testing, to determine the effect of the addition of a crosslinking molecule in the first composition.

The first composition is prepared by mixing the ingredients following table 9.

**Table 9. Ingredients of the first composition**

| **Ref** | **Animal proteins from cells or cell extracts wt%** | **Liquid oil wt%** | **Salt wt%** | **Calcium chloride wt%** | **Transglutaminase wt%** | **Water wt%** |
|---|---|---|---|---|---|---|
| F | 17.67 | 8.83 | 1.33 | 0.5 | 1 | 70.67 |

The second composition is a coagulation bath comprising 1.5% w/w of sodium alginate dissolved in distilled water.

The first composition is used in a spinneret to produce several flows of first composition coming into contact with the second composition used as a coagulation bath.

The first half of the samples is incubated at 37°C for 1h to allow the activity of the transglutaminase whereas the second half is incubated at 4°C for 1h to prevent the activity of the transglutaminase.

After incubation the mechanical properties of the protein threads are evaluated by tensile testing using the texturometer.

### Results & Conclusions

The results of the tensile tests are normalised based on the values obtained with the incubation at 4°C (F4), thus without benefiting from the activity of the transglutaminase.

**Table 10. Results from the tensile testing**

| **Ref** | **Strain at break** | **Load at Break** | **Tensile Stress** | **Young's modulus** |
|---|---|---|---|---|
| F4 | 100,00% | 100,00% | 100,00% | 100,00% |
| F37 | 100,11% | 165,47% | 159,38% | 165,13% |

The addition of transglutaminase in the first composition combined with a 37°C incubation (F37) significantly improves the load at break and the tensile stress.

Hence using a crosslinking molecule in the first composition can help to increase the hardness and the elasticity of the produced protein threads.

### Evaluation of the effect of the temperature on the protein threads

The objective of this experiment is to determine the maximum temperature to which the dope can be subjected before spinning and the effect of high temperatures in the coagulation bath at atmospheric pressure.

The first composition is prepared by mixing the ingredients following table 10.

**Table 11. Ingredients for the first composition**

| **Ref** | **Animal proteins from cells or cell extracts wt%** | **Plant proteins wt%** | **Liquid Oil wt%** | **NaCl wt%** | **Calcium chloride wt%** | ***Water wt%*** |
|---|---|---|---|---|---|---|
| G | 17.6 | 0 | 10 | 1 | 0.3 | *71.1* |

The second composition is a coagulation bath comprising 1.5% w/w of sodium alginate dissolved in distilled water.

The first composition is used in a spinneret to induce the flow of the first composition coming into contact with the second composition used as a coagulation bath.

In order to evaluate the effect of the temperature of the first composition on the method of the invention, the first composition is incubated for 10 minutes at different temperatures: at room temperature (RT), 55°C, 60°C, or 65°C. The first composition is used in a spinneret to induce the flow of the first composition coming into contact with the second composition used as a coagulation bath, the second composition in the coagulation bath being at room temperature.

In order to evaluate the effect of the temperature of the second composition in the coagulation bath on the method of the invention, the second composition is incubated for 10 minutes at: 65°C, 75°C and 85°C and the protein threads are produced by contacting the first composition (at room temperature) and the second composition, the later being a sodium alginate coagulation bath. The protein threads are incubated for 1 minute in the second composition before harvest.

After harvesting the fibers from the sodium alginate coagulation bath, their quality/integrity is evaluated.

### Results & Conclusions

The spinning is possible when the first composition is at 55°C and 60°C, but the protein thread morphology is not as homogeneous as at RT, some lumps and irregularities can be observed on the protein threads' surface.

Spinning is not possible when the dope is incubated at 65°C. The number of lumps increases considerably, blocking the needle and creating discontinuous protein threads. Hence, the first composition should not undergo a heat treatment of 65°C or more for 10 min.

Regarding the second composition, threads produced in coagulation baths at 65°C and 75°C have a more regular morphology than the ones obtained at RT (probably because of the lower viscosity of the coagulation bath when it is heated) but the color is slightly faded. Protein threads formed in the second composition at 85°C start having a lumpy texture on the outside.

### Forming an edible product comprising edible protein threads

As it has been described, protein threads illustrated in figure 3 can be used to produce an edible food product illustrated in figure 4.

The invention can be the subject of numerous variants and applications other than those described above. In particular, unless otherwise indicated, the different structural and functional characteristics of each of the implementations described above should not be considered as combined and / or closely and / or inextricably linked to each other, but on the contrary as simple juxtapositions. In addition, the structural and / or functional characteristics of the various embodiments described above may be the subject in whole or in part of any different juxtaposition or any different combination.

## Claims

1. Method (100) of producing an edible protein thread, said method comprising the following steps:
- Preparing a first composition (130), said preparation comprising:
∘ adding proteins, said proteins comprising animal proteins being from non-human cultivated animal cells, and
∘ adding a polyvalent ion;
- Preparing a second composition (140), said second composition comprising a - polyelectrolyte which is capable of complexing with the polyvalent ion of the first composition to form a heat-resistant complex; and
- Contacting (160) the first composition with the second composition to form the edible protein thread.

2. Method according to claim 1, wherein the second composition comprises the polyelectrolyte at a concentration of at least 0.01 % compared to the total wet weight of the second composition.

3. Method according to claim 1 or 2, wherein the second composition comprises the polyelectrolyte at a concentration of at most 5 %, preferably of at most 3 %, more preferably of at most 1 % compared to the total wet weight of the second composition.

4. Method according to any one of claim 1 to 3, wherein the first composition comprises the polyvalent ion at a concentration of at most 3 %, preferably of at most 2 %, more preferably of at most 1 % compared to the total wet weight of the first composition.

5. Method according to any one of claim 1 to 4, wherein at the contacting (160) step, the first composition is at a temperature of at most 65°C, preferably the first composition is not heated at a temperature above 60°C for 10 minutes or more.

6. Method according to any one of claim 1 to 5, wherein non-human cultivated animal cells are selected among cells from *Animalia* kingdom, preferably animal cells are selected among *Mammalia* cells, *Aves* cells, *Actinopterygii* cells, *Malacostraca* cells, and combination thereof; For example, *Mammalia* cells can be *Bovidae* cells, *Cervidae* cells, *Leporidae* cells or *Suidae* cells; *Aves* cells can be *Anatidae* cells or *Phasianidae* cells; *Actinopterygii* cells can be *Gadidae* cells, *Merlucciidae* cells, *Pleuronectidae* cells, *Salmonidae* cells, or *Scombridae* cells; *Malacostraca* cells can be *Palaemonidae* cells and *Mollusca* cells can be *Cephalopoda* cells or *Bivalvia* cells and wherein said non-human cultivated animal cells comprise cells selected among: stem cells such as embryonic stem cells, satellite cells, induced pluripotent stem cells, germ layers cells, fibro-adipogenic progenitors, muscle cells such as skeletal muscle cells, cardiac cells, or smooth muscle cells; myoblasts, myocytes, hepatocytes, fibrocytes, fibroblasts, adipocytes, chondrocytes, chondroblasts, keratinocytes, melanocytes, osteocytes, osteoblasts, Merkel cells, Langerhans cells, glial cells, Schwann cells, red blood cells (erythrocytes) and white blood cells, and combination thereof.

7. Method according to any one of claims 1 to 6, wherein the animal proteins comprise myofibrillar proteins, preferably at least 0.25% in weight compared to the total weight of proteins.

8. Method according to any one of claims 1 to 7, wherein the first composition comprises extracellular matrix non-human animal molecules, preferably at least 0.1 % in weight of extracellular matrix animal molecules compared to the total weight of proteins.

9. Method according to any one of claims 1 to 8, wherein the polyelectrolyte is a heat-resistant gel-forming polyelectrolyte, preferably the polyelectrolyte is a polysaccharide.

10. Method according to any one of claims 1 to 9, wherein the first composition comprises at least 10% in weight of total proteins compared to the total wet weight of the first composition and wherein, preferably the first composition further comprises plant proteins, algae proteins and/or fungal proteins.

11. Method according to any one of claims 1 to 10, wherein the preparation step of the first composition further comprises an addition of fat, preferably plant fat or fermentation-obtained fat, preferably it comprises the addition of at least 1 % in weight of fat, compared to the total wet weight of the first composition.

12. Method according to any one of claims 1 to 11, wherein the preparation of the first composition comprises an addition of disrupted non-human cultivated animal cells and/or intact non-human cultivated animal cells.

13. Edible protein thread obtainable from a method according to any one of claims 1 to 12, said edible protein thread comprising animal proteins and a polyelectrolyte forming a heat-resistant gel, said animal proteins being cultivated non-human animal cell proteins.

14. Method of manufacturing an edible food product comprising the steps of:
- Producing an edible protein thread according to a method of any one of claims 1 to 12; and
- Assembling one or several of the manufactured edible protein threads into an edible food product.

15. Edible food product obtainable from a method according to the claim 14.

## Patentansprüche

1. Verfahren (100) zum Erzeugen eines essbaren Proteinfadens, wobei das Verfahren die folgenden Schritte umfasst:
- Herstellen einer ersten Zusammensetzung (130), wobei das Herstellen umfasst:
∘ Zugeben von Proteinen, wobei die Proteine tierische Proteine umfassen, die aus nicht-menschlichen kultivierten tierischen Zellen stammen, und
∘ Zugeben eines mehrwertigen Ions;
- Herstellen einer zweiten Zusammensetzung (140), wobei die zweite Zusammensetzung einen Polyelektrolyten umfasst, der zur Komplexbildung mit dem mehrwertigen Ion der ersten Zusammensetzung in der Lage ist, um einen hitzebeständigen Komplex zu bilden; und
- Inkontaktbringen (160) der ersten Zusammensetzung mit der zweiten Zusammensetzung, um den essbaren Proteinfaden zu bilden.

2. Verfahren nach Anspruch 1, wobei die zweite Zusammensetzung den Polyelektrolyten in einer Konzentration von mindestens 0,01%, bezogen auf das Gesamtnassgewicht der zweiten Zusammensetzung, umfasst.

3. Verfahren nach Anspruch 1 oder 2, wobei die zweite Zusammensetzung den Polyelektrolyten in einer Konzentration von höchstens 5%, vorzugsweise von höchstens 3%, noch bevorzugter von höchstens 1%, bezogen auf das Gesamtnassgewicht der zweiten Zusammensetzung, umfasst.

4. Verfahren nach einem der Ansprüche 1 bis 3, wobei die erste Zusammensetzung das mehrwertige Ion in einer Konzentration von höchstens 3%, vorzugsweise von höchstens 2%, noch bevorzugter von höchstens 1%, bezogen auf das Gesamtnassgewicht der ersten Zusammensetzung, umfasst.

5. Verfahren nach einem der Ansprüche 1 bis 4, wobei die erste Zusammensetzung bei dem Schritt des Inkontaktbringens (160) eine Temperatur von höchstens 65°C aufweist, wobei vorzugsweise die erste Zusammensetzung nicht über eine Dauer von 10 Minuten oder länger auf eine Temperatur von über 60°C erhitzt wird.

6. Verfahren nach einem der Ansprüche 1 bis 5, wobei nicht-menschlichen kultivierte tierische Zellen ausgewählt werden aus Zellen aus der *Animalia-Welt,* vorzugsweise werden tierische Zellen ausgewählt aus *Mammalia-Zellen,* Aves-Zellen, *Actinopterygii-Zellen, Malacostraca-zellen* und einer Kombination davon; zum Beispiel können *Mammalia-Zellen Bovidae-*Zellen, *Cervidae-Zellen, Leporidae-Zellen* oder *Suidae-Zellen* sein; Aves-Zellen können Anatidae-Zellen oder *Phasianidae-*Zellen sein; *Actinopterygii-Zellen* können *Gadidae-Zellen, Merlucciidae-Zellen, Pleuronectidae-Zellen, Salmonidae-Zellen* oder *Scombridae-Zellen* sein; *Malacostraca-Zellen* können *Palaemonidae-Zellen* sein und *Mollusca-Zellen* können *Cephalopoda-Zellen* oder *Bivalvia*-Zellen sein, und wobei die nicht-menschlichen kultivierten tierischen Zellen Zellen umfassen, die ausgewählt werden aus: Stammzellen wie embryonalen Stammzellen, Satellitenzellen, induzierten pluripotenten Stammzellen, Keimschichtzellen, fibro-adipogenen Vorläuferzellen, Muskelzellen wie Skelettmuskelzellen, Herzzellen oder glatten Muskelzellen; Myoblasten, Myozyten, Hepatozyten, Fibrozyten, Fibroblasten, Adipozyten, Chondrozyten, Chondroblasten, Keratinozyten, Melanozyten, Osteozyten, Osteoblasten, Merkel-Zellen, Langerhans-Zellen, Gliazellen, Schwann-Zellen, roten Blutkörperchen (Erythrozyten) und weißen Blutkörperchen sowie Kombination davon.

7. Verfahren nach einem der Ansprüche 1 bis 6, wobei die tierischen Proteine myofibrilläre Proteine umfassen, vorzugsweise mindestens 0,25 Gew.-%, bezogen auf das Gesamtgewicht der Proteine.

8. Verfahren nach einem der Ansprüche 1 bis 7, wobei die erste Zusammensetzung extrazelluläre Matrixmoleküle nichtmenschlicher tierischer Herkunft umfasst, vorzugsweise mindestens 0,1 Gew.-% extrazelluläre Matrixmoleküle tierischer Herkunft, bezogen auf das Gesamtgewicht der Proteine.

9. Verfahren nach einem der Ansprüche 1 bis 8, wobei der Polyelektrolyt ein hitzebeständiger gelbildender Polyelektrolyt ist, vorzugsweise ist der Polyelektrolyt ein Polysaccharid.

10. Verfahren nach einem der Ansprüche 1 bis 9, wobei die erste Zusammensetzung mindestens 10 Gew.-% der Gesamtproteine, bezogen auf das Gesamtnassgewicht der ersten Zusammensetzung, umfasst und wobei vorzugsweise die erste Zusammensetzung weiterhin Pflanzenproteine, Algenproteine und/oder Pilzproteine umfasst.

11. Verfahren nach einem der Ansprüche 1 bis 10, wobei der Schritt des Herstellens der ersten Zusammensetzung ferner eine Zugabe von Fett, vorzugsweise Pflanzenfett oder fermentativ gewonnenes Fett, umfasst, vorzugsweise die Zugabe von mindestens 1 Gew.-% Fett, bezogen auf das Gesamtnassgewicht der ersten Zusammensetzung.

12. Verfahren nach einem der Ansprüche 1 bis 11, wobei das Herstellen der ersten Zusammensetzung eine Zugabe von gestörten nicht-menschlichen kultivierten tierischen Zellen und/oder intakten nicht-menschlichen kultivierten tierischen Zellen umfasst.

13. Essbarer Proteinfaden, erhältlich durch ein Verfahren nach einem der Ansprüche 1 bis 12, wobei der essbare Proteinfaden tierische Proteine und einen Polyelektrolyten umfasst, der ein hitzebeständiges Gel bildet, wobei die tierischen Proteine kultivierte nicht-menschliche tierische Zellproteine sind.

14. Verfahren zur Herstellung eines essbaren Lebensmittelprodukts, wobei das Verfahren die folgenden Schritte umfasst:
- Erzeugen eines essbaren Proteinfadens gemäß einem Verfahren nach einem der Ansprüche 1 bis 12; und
- Zusammenfügen eines oder mehrerer der hergestellten essbaren Proteinfäden zu einem essbaren Lebensmittelprodukt.

15. Essbares Lebensmittelprodukt, erhältlich durch ein Verfahren nach Anspruch 14.

## Revendications

1. Procédé (100) de production d'un fil de protéine comestible, ledit procédé comprenant les étapes suivantes :
- préparation d'une première composition (130), ladite préparation comprenant :
∘ l'addition de protéines, lesdites protéines comprenant des protéines animales provenant de cellules animales cultivées non humaines, et
∘ l'addition d'un ion polyvalent ;
- préparation d'une deuxième composition (140), ladite deuxième composition comprenant un polyélectrolyte qui est capable de se complexer avec l'ion polyvalent de la première composition pour former un complexe résistant à la chaleur ; et
- mise en contact (160) de la première composition avec la deuxième composition pour former le fil de protéine comestible.

2. Procédé selon la revendication 1, dans lequel la deuxième composition comprend le polyélectrolyte à une concentration d'au moins 0,01 % par rapport au poids humide total de la deuxième composition.

3. Procédé selon la revendication 1 ou 2, dans lequel la deuxième composition comprend le polyélectrolyte à une concentration d'au plus 5 %, de préférence d'au plus 3 %, mieux encore d'au plus 1 % par rapport au poids humide total de la deuxième composition.

4. Procédé selon l'une quelconque des revendications 1 à 3, dans lequel la première composition comprend l'ion polyvalent à une concentration d'au plus 3 %, de préférence d'au plus 2 %, mieux encore d'au plus 1 % par rapport au poids humide total de la première composition.

5. Procédé selon l'une quelconque des revendications 1 à 4, dans lequel, à l'étape de mise en contact (160), la première composition est à une température d'au plus 65°C, de préférence la première composition n'est pas chauffée à une température supérieure à 60°C pendant 10 minutes ou plus.

6. Procédé selon l'une quelconque des revendications 1 à 5, dans lequel les cellules animales cultivées non humaines sont choisies parmi les cellules du royaume *Animalia,* de préférence les cellules animales sont choisies parmi les cellules de *Mammalia,* les cellules d'*Aves*, les cellules d'*Actinopterygii,* les cellules de *Malacostraca,* et leurs combinaisons ; par exemple les cellules de *Mammalia* peuvent être des cellules de *Bovidae,* des cellules de *Cervidae,* des cellules de *Leporidae* ou des cellules de *Suidae ;* les cellules d'Aves peuvent être des cellules *d'Anatidae* ou des cellules de *Phasianidae ;* les cellules *d'Actinopterygii* peuvent être des cellules de *Gadidae,* des cellules de *Merlucciidae,* des cellules de *Pleuronectidae,* des cellules de *Salmonidae,* ou des cellules de *Scombridae ;* les cellules de *Malacostraca* peuvent être des cellules de *Palaemonidae* et les cellules de *Mollusca* peuvent être des cellules de *Cephalopoda* ou des cellules de *Bivalvia,* et dans lequel lesdites cellules animales cultivées non humaines comprennent des cellules choisies parmi : les cellules souches telles que les cellules souches embryonnaires, les cellules satellites, les cellules souches pluripotentes induites, les cellules de couches germinales, les progéniteurs fibro-adipogéniques, les cellules musculaires telles que les cellules musculosquelettiques, les cellules cardiaques, ou les cellules musculaires lisses ; les myoblastes, les myocytes, les hépatocytes, les fibrocytes, les fibroblastes, les adipocytes, les chondrocytes, les chondroblastes, les kératinocytes, les mélanocytes, les ostéocytes, les ostéoblastes, les cellules de Merkel, les cellules de Langerhans, les cellules gliales, les cellules de Schwann, les globules rouges (érythrocytes) et les globules blancs, et leurs combinaisons.

7. Procédé selon l'une quelconque des revendications 1 à 6, dans lequel les protéines animales comprennent des protéines myofibrillaires, de préférence à raison d'au moins 0,25 % en poids par rapport au poids total des protéines.

8. Procédé selon l'une quelconque des revendications 1 à 7, dans lequel la première composition comprend des molécules animales non humaines de matrice extracellulaire, de préférence au moins 0,1 % en poids de molécules animales de matrice extracellulaire par rapport au poids total des protéines.

9. Procédé selon l'une quelconque des revendications 1 à 8, dans lequel le polyélectrolyte est un polyélectrolyte formant un gel résistant à la chaleur, de préférence le polyélectrolyte est un polysaccharide.

10. Procédé selon l'une quelconque des revendications 1 à 9, dans lequel la première composition comprend au moins 10 % en poids de protéines totales par rapport au poids humide total de la première composition, et dans lequel, de préférence, la première composition comprend en outre des protéines végétales, des protéines d'algues et/ou des protéines fongiques.

11. Procédé selon l'une quelconque des revendications 1 à 10, dans lequel l'étape de préparation de la première composition comprend en outre l'addition de matière grasse, de préférence de matière grasse végétale ou de matière grasse obtenue par fermentation, de préférence comprend l'addition d'au moins 1 % en poids de matière grasse, par rapport au poids humide total de la première composition.

12. Procédé selon l'une quelconque des revendications 1 à 11, dans lequel la préparation de la première composition comprend l'addition de cellules animales cultivées non humaines rompues et/ou de cellules animales cultivées non humaines intactes.

13. Fil de protéine comestible pouvant être obtenu à partir d'un procédé selon l'une quelconque des revendications 1 à 12, ledit fil de protéine comestible comprenant des protéines animales et un polyélectrolyte formant un gel résistant à la chaleur, lesdites protéines animales étant des protéines de cellules animales non humaines cultivées.

14. Procédé de fabrication d'un produit alimentaire comestible, comprenant les étapes de :
- production d'un fil de protéine comestible conformément à un procédé de l'une quelconque des revendications 1 à 12 ; et
assemblage en un produit alimentaire comestible d'un ou plusieurs des fils de protéine comestibles fabriqués.

15. Produit alimentaire comestible pouvant être obtenu à partir d'un procédé selon la revendication 14.
